# EUROPÄISCHE PATENTSCHRIFT

(11) **EP 4 434 101 B1**
(45) Veröffentlichungstag und Bekanntmachung des Hinweises auf die Patenterteilung: **14.05.2025**
(21) Anmeldenummer: 22813999.4
(22) Anmeldetag: 07.11.2022
(51) Int. Cl.: H01M 4/86, C25B 11/04, C25B 1/04, H01M 8/1039, H01M 8/10, C25B 11/052, C25B 11/069, C25B 11/077, C25B 11/081

(54) **ABSTIMMUNG VON FORMULIERUNGEN AUF BASIS ANIONENLEITFÄHIGER POLYMERE (IONOMERE) ZUR HERSTELLUNG VON ELEKTROCHEMISCH AKTIVEN SCHICHTEN**
COORDINATION OF FORMULATIONS BASED ON ANION CONDUCTIVE POLYMERS (IONOMERS) FOR THE PREPARATION OF ELECTROCHEMICALLY ACTIVE LAYERS
ÉLABORATION DES FORMULATIONS À BASE DE POLYMÈRES CONDUCTEURS D'ANION (IONOMÈRES) DESTINÉE À LA FABRICATION DE REVÊTEMENTS ACTIFS DE MANIÈRE ÉLECTROCHIMIQUE

(30) Priorität: 16.11.2021 EP 21208557
(43) Veröffentlichungstag der Anmeldung: 25.09.2024
(73) Patentinhaber: Evonik Operations GmbH, 45128 Essen (DE)
(72) Erfinder: BOROWSKI, Patrick, 46238 Bottrop (DE); MALJUSCH, Artjom, 44866 Bochum (DE); ELKEMANN, Ines, 48653 Coesfeld (DE); ROTERS, Philipp, 48653 Coesfeld (DE)
(74) Vertreter: Evonik Patent Association
(86) Internationale Anmeldenummer: PCT/EP2022/080984
(87) Internationale Veröffentlichungsnummer: WO 2023/088714

(56) Entgegenhaltungen:
- WO-A1-2021/013694
- CN-A- 104 829 814
- CN-A- 106 750 303
- CN-A- 110 294 845
- US-A1- 2021 009 726
- PATRA SHANTI GOPAL ET AL: "The Role of Carbonate in Catalytic Oxidations", vol. 53, no. 10, 20 October 2020 (2020-10-20), US, pages 2189 - 2200, XP055915890, ISSN: 0001-4842, Retrieved from the Internet <URL:http://pubs.acs.org/doi/pdf/10.1021/acs.accounts.0c00344> DOI: 10.1021/acs.accounts.0c00344

## Beschreibung

Die Erfindung betrifft eine Dispersion, die zur Herstellung eines elektrochemisch aktiven Schichtkörpers bestimmt ist. Ferner betrifft sie die Herstellung eines elektrochemisch aktiven Schichtkörpers, im Rahmen dessen die erfinderische Dispersion bereitgestellt wird. Außerdem betrifft sie einen elektrochemisch aktiven Schichtkörper, der insbesondere durch das Herstellungsverfahren erhalten ist, sowie eine elektrochemische Zelle, die mindestens einen solchen Schichtkörper enthält. Außerdem betrifft die Erfindung ein Verfahren zur Herstellung von Wasserstoff und Sauerstoff durch Spaltung von Wasser, bei der die elektrochemische Zelle verwendet wird.

Elektrochemische Zellen sind technische Einrichtungen, in denen elektrochemische Prozesse durchgeführt werden. Sie umfassen in der Regel eine Anode, eine Kathode und ein zwischen Anode und Kathode angeordneten Separator, der die elektrochemische Zelle in zwei Kompartimente unterteilt. Beispiele für elektrochemische Zellen sind Batterien, Brennstoffzellen und Elektrolysezellen. In Elektrolysezellen wird Elektrolyse betrieben, also die Auftrennung oder das Knüpfen von chemischen Bindungen mit Hilfe von elektrischer Energie.

Eine bedeutende Elektrolyse ist die Wasserelektrolyse, bei der Wasser in Sauerstoff und Wasserstoff gespalten wird. Der Separator einer Wasserelektrolysezelle kann als ionenleitende Membran ausgeführt sein. Unterschieden werden dabei anionenleitende Membranen (anion exchange membranes - AEM) und protonenleitende Membranen (proton exchange membranes - PEM). Die Wasserspaltung mit Hilfe von anionenleintenden Membranen wird oft AEM-WE (engl. anion exchange membrane water electrolysis) abgekürzt oder auch alkalische Membran-Wasserelektrolyse genannt. Die altbekannte alkalische Wasserelektrolyse mit einem porösen Diaphragma ist keine AEM-WE im heutigen Sinne, weil das Diaphragma fluidleitend ist. Die Membran einer AEM-WE ist indessen fluidisch dicht. Die Anionenleitung erfolgt auf Ebene der Ionen.

Einen hervorragenden Überblick über Aufbau und Werkstoffe der gegenwärtig in der AEM-WE eingesetzten elektrochemischen Zellen bieten:
Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

In elektrochemischen Prozessen finden Stoffumsätze an der Oberfläche von Elektrokatalysatoren statt. Zur Erzeugung einer hohen katalytisch aktiven Oberfläche sowie zur Ermöglichung von Stofftransporten werden Elektrokatalysatoren in porösen, elektrisch leitfähigen Schichten verwendet. Die Schichten werden auf andere Bauelemente der elektrochemischen Zelle aufgetragen oder als separates Bauteil eingesetzt. Allgemein soll hier von elektrochemisch aktiven Schichtkörpern die Rede sein, unabhängig davon, ob der Schichtkörper neben der Katalyse noch weitere Funktionen innerhalb der Zelle erfüllt.

Auf dem Gebiet der Wasserelektrolysezellen ist es üblich, Membranen mit elektrokatalytisch aktivem Material zu beschichten, sodass eine "catalyst coated membrane" (CCM) erhalten wird; vgl. Miller et al. Sect. 5.2. Eine solche CCM ist ein erstes Beispiel für einen elektrochemisch aktiven Schichtkörper.

Ein anderes Beispiel für einen elektrochemisch aktiven Schichtkörper kann eine Elektrode sein, bei der ein elektrisch leitfähiges Substrat mit elektrokatalytisch aktivem Material beschichtet wird, sodass ein "catalyst coated substrate" (CCS) erhalten wird; vgl. Miller et al. Sect. 5.1. Ein solches CCS ist ein zweites Beispiel für einen elektrochemisch aktiven Schichtkörper.

Die Morphologie eines elektrochemisch aktiven Schichtkörpers wird durch die Katalysatorpartikel und deren Anordnung in dem Schichtkörper bestimmt. Zur dauerhaft mechanischen Haftung der Katalysatorpartikel untereinander sowie an einem Trägermaterial eignen sich polymere Binder - insbesondere solche, die einen Ionentransport entsprechend der elektrochemischen Reaktion ermöglichen (ionenleitfähiges Polymer, oft auch als "Ionomer" bezeichnet).

Die Effizienz und Lebensdauer von elektrochemisch aktiven Schichtkörpern werden insbesondere durch Auswahl sowie Abstimmung der einzelnen Komponenten und deren Verarbeitung bestimmt. Dabei entscheidend ist bereits die Herstellung geeigneter Katalysator-Ionomer-Formulierungen.

In der wissenschaftlichen Literatur sind bereits einige Katalysator-Ionomer-Formulierungen sowie zugehörige Verfahren zur Herstellung von elektrochemisch aktiven Schichtkörpern bekannt:
So beschreiben Chen et al. die Herstellung von CCMs für Brennstoffzellen auf Basis des Ionomers Poly(fluorenyl aryl piperidinium):
Chen, N., Wang, H.H., Kim, S.P. et al. Poly(fluorenyl aryl piperidinium) membranes and ionomers for anion exchange membrane fuel cells. Nat Commun 12, 2367 (2021). DOI 10.1038/s4 1467-021-226 12-3

Park et al. beschichten eine anionenleitfähige Membran der Fa. Fumatech (FUMATECH BWT GmbH, Bietigheim-Bissingen, Deutschland) mit einem Gemisch aus Iridiumoxid und Platin/Kohlenstoff, um eine CCM für eine Wasserelektrolysezelle zu erhalten:
Ji Eun Park, Sun Young Kang, Seung-Hyeon Oh, et al. High-performance anion-exchange membrane water electrolysis, Electrochimica Acta, Volume 295, 2019, Pages 99-106, DOI 10.1016/j.electacta.2018.10.143

Als lonomer nutzten Park et al das Polymer FAA-3-Br der Fa. Fumatech (FUMATECH BWT GmbH, Bietigheim-Bissingen, Deutschland). Eine genaue Spezifikation des lonomers FAA-3-Br liefern Park et al. indes nicht.

Leng et al. stellten katalysatorbeschichtete Elektroden für eine alkalische Brennstoffzelle her, indem sie ein Kohlenstoffvlies mit einer Pt-haltigen Tinte bespritzten. Die Tinte enthielt eine Vorstufe eines Nafion-Ionomers. Das lonomer wurde erst auf dem Kohlenstoffvlies in-situ vernetzt:
Yongjun Leng, Lizhu Wang, Michael A. Hickner, et al., Alkaline membrane fuel cells with in-situ cross-linked ionomers, Electrochimica Acta, Volume 152, 2015, Pages 93-100, DOI 10.1016/j.electacta.2014.11.055

In ähnlicher Weise nutzen Faid et al. eine Katalysatortinte enthaltend gelöstes lonomer, Katalysator, Isopropanol und Wasser. Als Katalysatorsystem wird Ni, Ni/C und Pt/C und Ir verwendet:
Alaa Y. Faid, et al.: Effect of anion exchange ionomer content on electrode performance in AEM water electrolysis, International Journal of Hydrogen Energy, Volume 45, Issue 53, 2020, Pages 28272-28284, DOI 10.1016/j.ijhydene.2020.07.202

Aus der US 2021/0009726 A1 ist die Herstellung von elektrochemisch aktiven Schichtkörpern bekannt. Genauer gesagt, handelt es sich bei den Schichtkörpern um MEA (Membrane Electrode Assemblies), die für den Einsatz in Brennstoffzellen bestimmt sind. Bei der Herstellung der MEA wird ein lonomer in einem Wasser/Alkohol-Gemisch gelöst und Katalysator-Partikel in der Lösung dispergiert. Die Dispersion wird auf ein Substrat aufgetragen. Dieses Vorgehen setzt voraus, dass das lonomer in Wasser/Alkohol löslich ist. Elektrochemisch aktive Schichtkörper, die in der Wasserelektrolyse eingesetzt werden sollen, dürfen keine wasserlöslichen Ionomere enthalten, da diese sich im Betrieb der Zelle wieder auflösen würden.

Pandiarajan T. et al beschichten eine MEA mit einer Dispersion aus Katalysator, Ionomer, DMSO, 2-propanol und Wasser. Als Katalysator wird Ce-dotiertes Mangan/Eisen-Spinell eingesetzt.
Pandiarajan T., Berchmans L.J., Ravichandran S.: Fabrication of spinel ferrite based alkaline anion exchange membrane water electrolysers for hydrogen production. DOI: 10.1039/c5ra01123j

Aus der WO 2021/013694 A1 ist ein anionen leitendens Polymer mit einer Strukturformel (I) bekannt, das für die Herstellung von Membranen verwendet werden kann. Die Herstellung von CCMs, CCSs und anderen elektrochemisch aktiven Schichtkörpern ist darin nicht offenbart.

Die Herstellung von lonomere mit einer Strukturformel (II) ist in der zum Zeitpunkt dieser Anmeldung noch unveröffentlichten europäischen Anmeldung 21152487.1 beschrieben.

Die Herstellung von lonomere mit einer Strukturformel (III) ist in der zum Zeitpunkt dieser Anmeldung noch unveröffentlichten europäischen Anmeldung 21162711.2 beschrieben.

Der Erfindung lag die Aufgabe zu Grunde, anionenleitende Polymere als lonomere zur Herstellung von elektrochemisch aktiven Schichtkörpern nutzbar zu machen.

Gelöst wird diese Aufgabe jeweils durch eine Dispersion nach Anspruch 1, durch ein Verfahren zur Herstellung eines elektrochemisch aktiven Schichtkörpers nach Anspruch 8, durch den elektrochemisch aktiven Schichtkörper nach Anspruch 13 und 15, durch die elektrochemische Zellen nach Anspruch 16 und durch das Verfahren zur Herstellung von Wasserstoff und Sauerstoff nach Anspruch 17. Bevorzugte Ausführungsformen der Erfindung sind in den abhängigen Ansprüchen niedergelegt.

Alle diese Gegenstände beruhen auf dem einheitlichen Konzept, ein lonomer gemäß Strukturformel (I), (II) und (III) in Lösung zu bringen, in einer Dispersion zu verarbeiten und mit dieser Dispersion katalytisch aktive Schichtkörper für elektrochemische Zellen herzustellen. Alle die hier offenbarten Gegenstände bilden damit einen gemeinsamen erfinderischen Komplex.

Im Rahmen von Untersuchungen stellte sich heraus, dass sich diese Art von Polymeren (Ionomere) insbesondere in Zusammenhang mit den nachfolgend abgestimmten Katalysator-Ionomer-Formulierungen erfolgreich zu Katalysatorschichten prozessieren ließen, welche sich insbesondere für elektrochemische Prozesse eignen, bei denen der Transport von Anionen stattfindet. Besonders gut funktioniert dies in AEM-WE Prozessen. Die aus der hier beschriebenen Dispersion hergestellte Schichtkörper eignen sich daher insbesondere zum Einsatz als CCM oder CCS in alkalischen Wasserelektrolysen.

Der gemeinsame Vorteil der lonomere nach Strukturformel (I), (II) oder (III) ist ihre gute ionische Leitfähigkeit, hohe chemische sowie mechanische Beständigkeit im alkalischen Milieu und die geringen Synthesekosten.

Die zu der Dispersion verarbeiteten anionenleitende Polymere gehorchen der Strukturformel (I) oder (II) oder (III).

Das anionenleitende Polymer gemäß Strukturformel (I) ist wie folgt definiert: 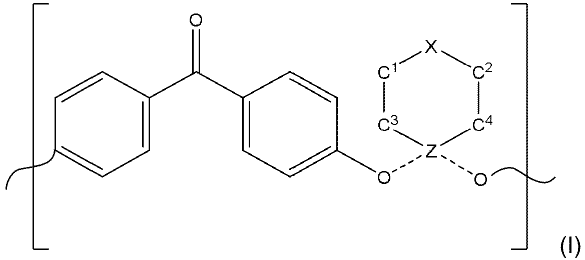
worin X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und worin Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können.

Das anionenleitende Polymer gemäß Strukturformel (II) ist wie folgt definiert: 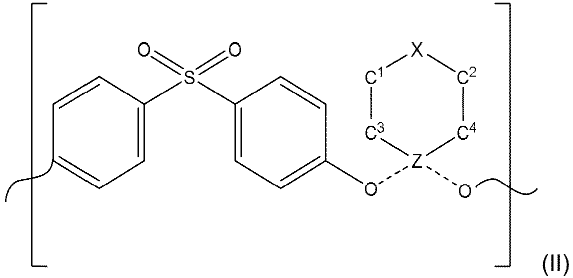
worin X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und worin Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist.

Das anionenleitende Polymer gemäß Strukturformel (III) ist wie folgt definiert: 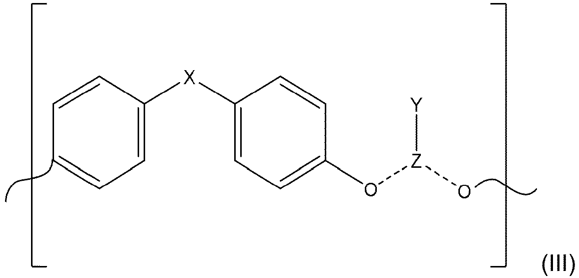
worin X für eine Keton- oder Sulfon-Gruppe steht;
worin Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
worin Y für ein Strukturelement steht, welches mindesten ein Stickstoffatom mit positiver Ladung umfasst, wobei dieses Stickstoffatom mit dem Strukturelement Z verbunden ist.

Ein erster Gegenstand der Erfindung ist mithin eine Dispersion, welche zumindest die folgenden Komponenten enthält:
- eine Lösung eines anionenleitfähigen Polymers;
- Partikeln enthaltend mindestens eine elektrokatalytisch aktive Substanz;
- optional mindestens ein Dispersionsmittel;
bei der das anionenleitfähige Polymer mindestens eine Struktur enthält, welche ausgewählt ist aus der Gruppe bestehend aus den wie oben definierten Strukturformeln (I), (II) und (III).

Innerhalb der Dispersion beträgt das Massenverhältnis von anionenleitendem Polymer zu Partikel zwischen 1:1 und 1:20 oder zwischen 1:1 und 1:5 oder zwischen 1:6 und 1:10. Dies bedeutet, dass der Gewichtsanteil der Partikel enthaltend die elektrokatalytisch aktive Substanz größer ist als der Gewichtsanteil des anionenleitfähigen Polymer. Auf diese Weise wird eine hohe Dichte katalytisch aktiven Zentren erreicht. Das aus der Dispersion hergestellte Schichtkörper erreicht so eine besonders hohe elektrochemische Aktivität.

Diese Ionomere lassen sich besonders gut auflösen in Lösemittel aus der folgenden Gruppe: N-Methyl-2-pyrrolidon (NMP), N,N-Dimethylformamid (DMF), N,N-Dimethylacetamid (DMAC) oder Dimethylsulfoxid (DMSO). DMSO ist dabei bevorzugt. Das Lösemittel lässt sich durch Trocknung entfernen, sodass das lonomer als Feststoff in Form eines Polymerfilms zurückbleibt. Die Konzentration des anionenleitfähigen Polymers bezogen auf das Volumen des Lösemittels sollte zwischen 10 mg/ml und 500 mg/ml oder zwischen 50 mg/ml und 100 mg/ml betragen.

Vorzugsweise wird eine elektrokatalytisch aktive Substanz eingesetzt, welche mindestens ein Übergangselement aufweist. Übergangselemente im Sinne der Erfindung sind Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg. Substanzen enthaltend ein Übergangselement weisen nämlich eine höhere elektrokatalytische Aktivität auf als Substanzen ohne Übergangselement. Außerdem bewirkt die vergleichsweise gute elektrische Leitfähigkeit der Übergangsmetalle eine Absenkung des Innenwiderstands der elektrochemischen Zelle.

Die elektrolytische Aktivität des aus der Dispersion hergestellten Schichtkörpers wird durch Zugabe eines Elektrokatalysators in die Dispersion realisiert. Der Elektrokatalysator wird dann im späteren Schichtkörper durch das lonomer immobilisiert. Als Elektrokatalysator werden beispielsweise Partikel verwendet, die eine elektrokatalytisch aktive Substanz enthalten, welche ausgewählt ist aus der Gruppe bestehend aus Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx), Blei-Ruthenium-Mischoxid (PbRuOx), Platin auf Kohlenstoff (Pt/C). Um eine effektive Dichte der katalytisch aktiven Zentren im Schichtkörper zu erzielen, wird das Massenverhältnis von anionenleitendem Polymer zu Partikel in der Dispersion zwischen 1:1 und 1:20 oder zwischen 1:1 und 1:5 oder zwischen 1:6 und 1:10 eingestellt.

Besonders bevorzugt wird ein anionenleitendes Polymer in der Dispersion verarbeitet, was durch mindestens eine der folgenden Strukturformeln (IVa) bis (IVd) beschrieben ist: 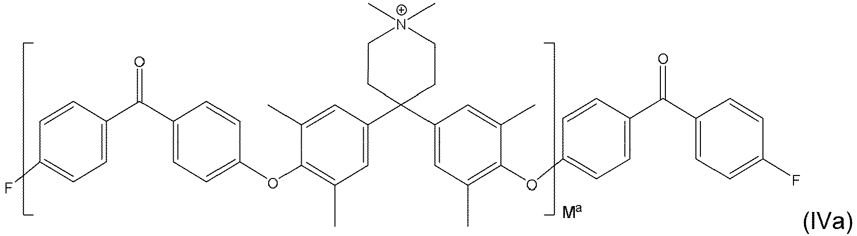 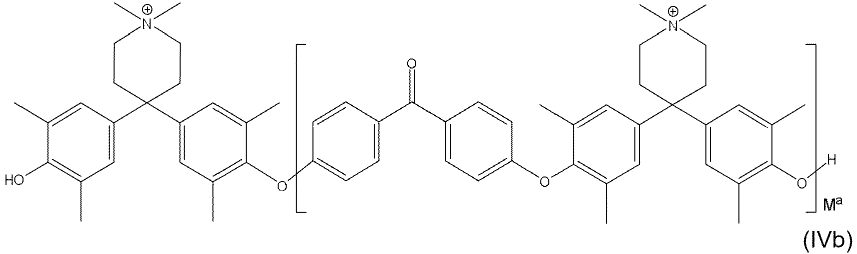 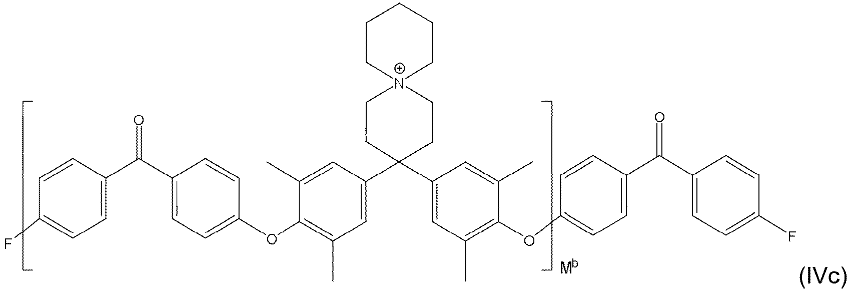 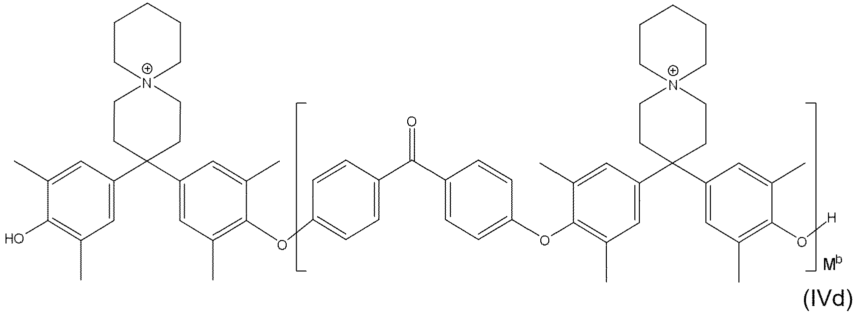 wobei M^{a} und M^{b} eine natürliche Zahl von 1 bis 500 oder von 5 bis 250 darstellen, und wobei die aromatischen Ringe weiter substituiert sein können mit einem oder mehr Halogenen und/oder mit einem oder mehreren C₁- to C₄- Alkyl-Resten, insbesondere mit Methyl-Resten.

Die Dispersion muss nicht zwingend ein gesondertes Dispersionsmittel enthalten. Unter Umständen kann das Lösemittel gleichzeitig die Funktion als Dispersionsmittel übernehmen. Um die Verarbeitbarkeit der Dispersion zu erhöhen, wird allerdings vorzugsweise mindestens ein Dispersionsmittel zugesetzt. Dadurch wird die Dispersion fließfähiger. Es kann auch ein Gemisch aus mehreren Dispersionsmitteln eingesetzt werden. Insbesondere hat es sich als vorteilhaft herausgestellt, wenn die Rezeptur der Dispersion zwei Dispersionsmittel enthält, nämlich Wasser und einen Alkohol, wobei das Volumenverhältnis des Wassers zu dem Alkohol zwischen 1:3 und 3:1 beträgt. Vorzugsweise werden Wasser und Alkohol im Verhältnis 1:1 eingesetzt. Als Alkohol eignen sich Ethanol, Methanol, 1-Propanol oder 2-Propanol. Ein solches Wasser/Alkoholgemisch verdampft beim Trocknen der Dispersion gut.

Um eine gute Verarbeitbarkeit zu gewährleisten, beträgt die Feststoffkonzentration der Dispersion vorzugsweise zwischen 5 mg/ml bis 100 mg/ml oder zwischen 10 mg/ml und 25 mg/ml, jeweils bezogen auf das Gesamtvolumen der flüssigen Bestandteile der Dispersion. Die in der Dispersion anwesenden Feststoffe entsprechen den katalytisch aktiven Partikeln. Das lonomer in der Lösung wird als flüssig angesehen.

Die hier beschriebene Dispersion ist dazu bestimmt einen elektrochemisch aktiven Schichtkörper herzustellen.

Ein weiterer Gegenstand der Erfindung ist daher ein Verfahren zur Herstellung eines elektrochemisch aktiven Schichtkörpers, umfassend die folgenden Schritte:
a) Bereitstellen einer erfindungsgemäßen Dispersion, welche zumindest die folgenden Komponenten enthält:
   - ein Dispersionsmittel;
   - eine von dem Dispersionsmittel verschiedenes, organisches Lösemittel;
   - eine Lösung eines anionenleitfähigen Polymers in dem organischen Lösemittel;
   - Partikeln enthaltend mindestens eine elektrokatalytisch aktive Substanz;
b) Bereitstellen eines Substrats;
c) Auftragen der Dispersion auf das Substrat;
d) Trocknen der auf dem Substrat aufgetragenen Dispersion;
e) Erhalt eines Schichtkörpers, umfassend das Substrat und eine darauf aufgebrachte, zumindest zweiphasige Beschichtung, wobei die Beschichtung als erste Phase das anionenleitfähige Polymer und als zweite Phase die Partikel umfasst und wobei die zweite Phase in der ersten Phase dispergiert ist.

Das Lösemittel und das optional vorhandene Dispersionsmittel verdampft beim Trocknen, sodass es sich nicht im Schichtkörper wiederfindet.

Das Auftragen der Dispersion auf das Substrat erfolgt in bekannter Weise durch Rakeln, durch Sprühen oder durch Siebdruck.

Ein Vorteil der hier beschriebenen Dispersion besteht darin, dass sich mit ihr textile Substrate beschichten lassen. Elektrochemisch aktive Schichtkörper auf Basis einer textilen Struktur weisen eine besonders große Oberfläche auf und können daher eine hohe Prozessintensität ermöglichen. Vorzugsweise wird daher als Substrat ein textiles Flächengebilde verwendet. Textile Flächengebilde sind Vliese, Filze, Gewebe oder Gewirke. Die Flächengebilde sind aus Fasern, Fäden oder Garnen aufgebaut. Vorzugsweise werden Filze oder Vliese mit der Dispersion beschichtet, die aus Nickel-Fasern, Kohlenstoff-Fasern oder Stahl-Fasern aufgebaut sind. Derartige Substrate sind nämlich kostengünstig verfügbar, elektrisch leitend und im alkalischen Milieu eines AEM-WE-Prozesses stabil. Sie eignen sich daher als Elektrode in CCS Bauweise.

Mit der hier beschriebenen Dispersion kann auch eine Membran aus einem anionenleitenden Polymer beschichtet werden. Wird eine anionenleitende Membran als Substrat verwendet, handelt es sich bei dem erhaltenen Schichtkörper um eine CCM. Vorzugsweise enthält die als Substrat verwendete Membran ebenfalls lonomere nach Struktur (I) oder (II) oder (III). Dann lässt sich eine besonders gute Anbindung der Katalysatorpartikel an die Membran realisieren, weil die lonomere kompatibel sind.

Eine für die Herstellung von elektrochemisch aktiver Schichtkörper optimal geeignete Dispersion wird durch die folgende Prozedur hergestellt:
i) Bereitstellen des Dispersionsmittels;
ii) Bereitstellen des von dem Dispersionsmittel verschiedenen, organischen Lösemittels;
iii) Bereitstellen des anionenleitfähigen Polymers;
iv) Bereitstellen der Partikeln;
v) Lösen des anionenleitfähigen Polymers in dem organischen Lösemittel, sodass eine Lösung des anionenleitfähigen Polymers erhalten wird:
vi) Suspendieren der Partikel in dem Dispersionsmittel, sodass eine Suspension erhalten wird;
vii) Dosieren der Lösung zu der Suspension.

Diese Vorgehensweise führt zu einer besonders homogenen Verteilung der elektrokatalytisch aktiven Partikel in dem anionenleitenden Polymer und zu einer stabilen Dispersion.

Als Dispersionsmittel eignen sich insbesondere Mischungen aus Wasser und Alkohol, da sich die Partikel darin gut suspendieren lassen und Wasser und Alkohol nach dem Auftragen der Dispersion schnell trocknen. Der Siedepunkt von Wasser und Alkohol ist nämlich niedriger als etwa von DMSO (189°C). Folglich ermöglicht die Verwendung von Wasser/Alkohol als Dispersionsmittel bei der Herstellung elektrochemisch aktiver Schichtkörper einen raschen Schichtaufbau. Als Lösemittel ist Wasser indes ungeeignet, da die anionenleitfähigen Polymere, die in einer Wasserelektrolyse eingesetzt werden sollen, prinzipbedingt wasserunlöslich sein müssen. Andernfalls würde sich die Wasserelektrolysezelle im Betrieb rasch selbst zerlegen. Da auch Alkohole die hier beschriebenen anionenleitenden Polymere kaum lösen, muss ein deutlich leistungsfähigeres organisches Lösemittel verwendet werden. Bevorzugt wird als organisches Lösemittel mindestens eine der folgenden Substanzen eingesetzt: N-Methyl-2-pyrrolidon (NMP), N,N-Dimethylformamid (DMF), N,N-Dimethylacetamid (DMAC) oder Dimethylsulfoxid (DMSO). DMSO ist dabei bevorzugt. Diese Lösemittel lassen sich ebenfalls durch Trocknung entfernen, sodass das lonomer als Feststoff in Form eines Polymerfilms zurückbleibt. Als Dispersionsmittel eignen sich die genannten organischen Substanzen jedoch nicht für alle Katalysatorsysteme, wie Sedimentationsversuche zeigen. Abhängig von dem gewählten Katalysatorsystem macht es daher Sinn, als Lösemittel bzw. Dispersionsmittel unterschiedliche Substanzen zu verwenden.

Ein weiterer Gegenstand der Erfindung ist ein elektrochemisch aktiver Schichtkörper, umfassend ein Substrat und eine darauf aufgebrachte, zumindest zweiphasige Beschichtung, wobei die Beschichtung als erste Phase ein anionenleitfähiges Polymer und als zweite Phase Partikel enthaltend eine elektrokatalytisch aktive Substanz umfasst, und wobei die zweite Phase in der ersten Phase dispergiert ist, wobei das anionenleitfähige Polymer mindestens eine Struktur nach Formel (I), (II) oder (III) enthält. Abhängig von dem gewählten Substrat handelt es sich bei dem Schichtkörper insbesondere um eine CCM oder um ein CCS. In beiden Fällen liegt die Beladung bezogen auf die elektrochemisch aktive Substanz vorzugsweise zwischen 0,2 mg/cm² und 10 mg/cm² oder 0,4 mg/cm² und 2 mg/cm².

Besonders bevorzugt enthält der elektrochemisch aktive Schichtkörper ein anionenleitendes Polymer, das durch mindestens eine der folgenden Strukturformeln (IVa) bis (IVd) beschrieben ist: 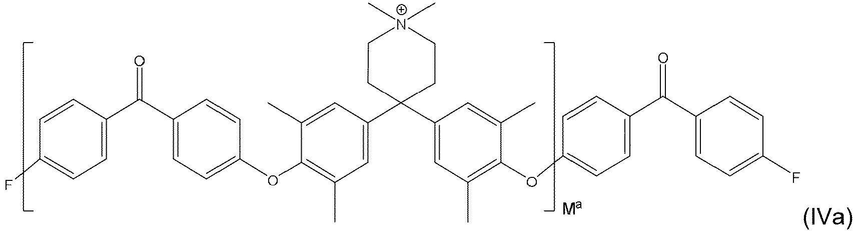 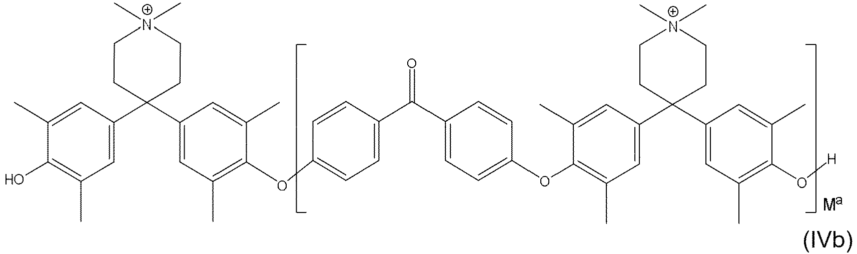 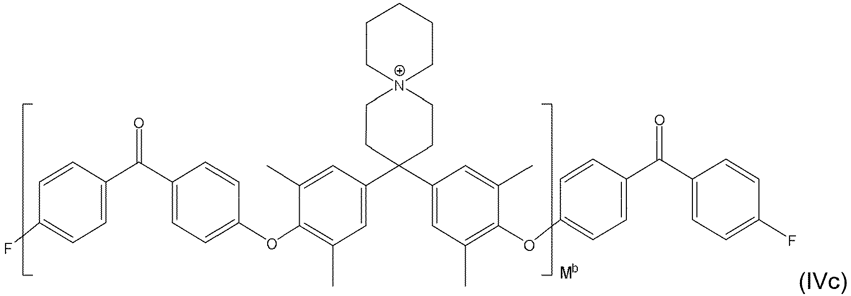 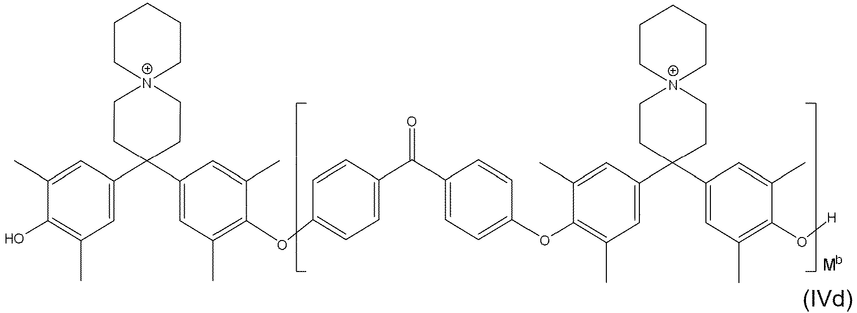 wobei M^{a} und M^{b} eine natürliche Zahl von 1 bis 500 darstellen, vorzugsweise von 5 bis 250 und wobei die aromatischen Ringe weiter substituiert sein können mit einem oder mehr Halogenen und/oder mit einem oder mehreren C₁- to C₄- Alkyl-Resten, insbesondere mit Methyl-Resten.

Derartige Ionomere haben eine gute ionische Leitfähigkeit, hohe chemische sowie mechanische Beständigkeit im alkalischen Milieu und haben geringen Synthesekosten. Außerdem immobilisieren sie die Katalysatorpartikel gut auf dem Substrat und lassen sich hervorragend in der Dispersion verarbeiten.

Je nach gewählter Rezeptur der Dispersion, der gewählten Auftragsmethode und Zeit/Temperaturregime des Trocknungsprozesses erhält die Beschichtung auf dem Substrat, genauer gesagt ihrer erste disperse Phase aus dem anionenleitenden Polymer eine spezielle Struktur, welche die Erreichbarkeit der katalytisch aktiven Zentren der Partikel in der Beschichtung für den Elektrolyten verbessert. Ein elektrochemisch aktiver Schichtkörper, welcher erhalten ist durch das erfindungsgemäße Beschichtungsverfahren, ist daher ebenfalls ein Gegenstand der Erfindung.

Der aus der Dispersion hergestellte, elektrochemisch aktive Schichtkörper lässt sich vorzüglich in einer Elektrochemischen Zelle einsetzen, etwa als CCM oder CCS. Die elektrochemische Zelle kann neben dem Schichtkörper noch weitere Komponenten umfassen, etwa andere Elektroden oder Separatoren, oder Fluidleiter oder Kontaktplatten.

Aufgrund der besonderen Beständigkeit des lonomers und der katalytischen Aktivität der Partikel, die in der Dispersion verarbeitet wurden und sich in dem Schichtkörper wieder finden, wird die den Schichtkörper enthaltende elektrochemische Zelle vorzugsweise zur Durchführung eines Verfahrens zur Herstellung von Wasserstoff und Sauerstoff durch elektrochemische Spaltung von Wasser verwendet, bei dem ein wässriger Elektrolyt mit einem pH-Wert von 7 bis 15 in die elektrochemische Zelle gefüllt wird. Eine solcher AEM-WE Prozess ist ebenfalls ein Gegenstand der Erfindung.

Die Erfindung soll nun anhand von Ausführungsbeispielen näher erläutert werden. Es zeigen:
- Figur 1:: Aufbau der elektrochemischen Zelle;
- Figur 2:: Teststand für die elektrochemischen Zelle;
- Figur 3:: Graphische Darstellung der Strom-Spannungs-Kurven.

Grundlage der Herstellung von Formulierungen mit oben beschriebenen Polymeren (lonomeren) ist die Herstellung einer lonomer-Lösung. Als Lösemittel eignen sich beispielsweise N-Methyl-2-pyrrolidon (NMP), N,N-Dimethylformamid (DMF), N,N-Dimethylacetamid (DMAC) oder Dimethylsulfoxid (DMSO), bevorzugt ist DMSO, da es als nicht-Gefahrstoff eingestuft ist. Der Anteil des Polymers liegt zwischen 10 mg/ml und 500 mg/ml oder zwischen 25 mg/ml und 200 mg/ml .

Das Massenverhältnis von lonomer zu katalytisch aktiver Substanz liegt zwischen 1:1 und 1:20 oder zwischen 1:3 und 1:5 bei Katalysatoren auf Basis von beispielsweise Platin geträgert auf Kohlenstoff (Pt/C), Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx) oder Blei-Ruthenium-Mischoxid (PbRuOx).

Katalysator und Ionomer-Lösung können zum einen nach Dispergieren (beispielsweise mit einem Dispergiergerät ULTRA-TURRAX^{®} von der Firma IKA, Staufen, DE oder einem Dreiwalzwerk bspw. von der Firma EXAKT, Norderstedt, DE - unter Schereinwirkung bewirkt beides die Einstellung der Partikelgröße (d₅₀ im Bereich zwischen 0,1 µm bis 50 µm) sowie einer Dispersion, - direkt appliziert werden (beispielsweise mittels Siebdruckes oder einem Rakelverfahren). Zum anderen können insbesondere für die Applikation in Sprühprozessen wässrige Dispersionen hergestellt werden, bei denen ein Katalysator zunächst in einer Lösung aus Wasser sowie niederen Alkoholen (vorzugsweise Ethanol, 1-Propanol oder 2-Propanol) unter Einwirkung von Ultraschall oder einem Dispergierer (beispielsweise mit einem Dispergiergerät ULTRA-TURRAX^{®} von der Firma IKA, Staufen, DE mit zusätzlicher Einstellung der Partikelgröße: d₅₀ im Bereich zwischen 0,1 µm bis 50 µm) dispergiert wird und dem anschließend die Ionomer-Lösung (vorzugsweise 50 mg/ml) mit nachfolgend weiterem Dispergieren unter Ultraschall zugesetzt wird. Der Feststoffkonzentration hierbei liegt zwischen 5 mg/ml und 100 mg/ml, bevorzugt zwischen 10 mg/ml und 25 mg/ml. Die Einheit mg/ml der lonomer-Lösung bezieht sich auf Masse Polymer / Volumen Lösemittel bzw. der Dispersion auf Masse Katalysator / Volumen flüssiger Bestandteile.

Als Substrate für die Applikation der hergestellten Formulierungen eignen sich insbesondre Vliese aus Kohlenstoff bzw. Vliese aus Metall (Nickel, Edelstahl, Titan) sowie ionenleitende, polymere Membranen.

Die Beladung des Substrates bezogen auf den Katalysator liegt zwischen 0,2 mg/cm² und 10 mg/cm² oder 0,4 mg/cm² und 2 mg/cm².

Tabelle 1 zeigt die Zusammensetzung einiger erfindungsgemäßer Dispersionen, mit denen Katalysatorschichten auf Substrate aufgebracht werden konnten.

Bei dem verwendeten lonomer handelt es sich um eine Substanz hergestellt wie in Beispiel 3 der WO 2021/013694 A1 beschrieben.

Das lonomer wurde zunächst unter Rühren und Temperatur (60 °C) über 16 h in Dimethylsulfoxid gelöst. Anschließend wurden die Katalysatoren im Dispergiermittel, bestehend aus gleichen Volumenteilen Wasser und Ethanol, entweder unter Ultraschall (BRANSONICTM B-1200 E2 der Firma Branson Ultrasonics Corporation, Brookfield, CT, US) für 30 min im Eisbad und einer Leistung von 30 W oder mit einem Dispergiergerät ULTRA-TURRAX^{®} T10 basic (Firma IKA, Staufen, DE) für 3 min auf Stufe 3 dispergiert. Nach Zugabe der Ionomerlösung erfolgt eine weitere Dispersion mittels Ultraschalls im Eisbad für 1 min bei einer Leistung von 30 W und einer Dispergierung mit einem Schüttler (MS1 Minishaker der Firma IKA, Staufen, DE) für 10 s bei 2500 rpm. Die Anteile wurden entsprechend Tabelle 1 gewählt.

Die erfindungsgemäßen Dispersionen wurde mit einem Ultraschallsprühbeschichter PRISM 400 (Fa. Ultrasonic Systems, Inc, Haverhill, MA, US) auf die Substrate gesprüht. Die Formulierung wird während des Prozesses stets gerührt. Diese Substrate wurden auf einer Temperatur von 60 °C gehalten, wodurch kontinuierlich das Dispergiermittel verdampfte, sodass die erfindungsgemäßen Schichtkörper hergestellt wurden.

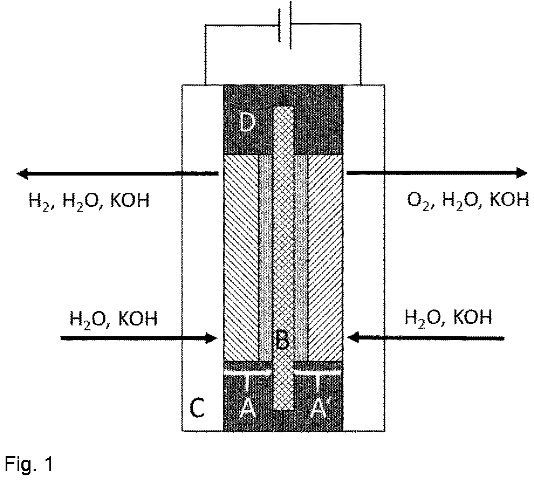

Die so erhaltenen Schichtkörper ließen sich verwenden als Elektroden zur Erzeugung von Wasserstoff und/oder Sauerstoff in der alkalischen Membran-Wasserelektrolyse (AEM-WE). Die elektrochemische Zelle gemäß Figur 1 bestand dabei im Wesentlichen aus zwei elektrisch aktiven Schichtkörpern (A, A') (wovon mindestens einer nach dem erfindungsgemäßen Verfahren hergestellt wurde), die durch eine anionenleitende Membran (B) getrennt wurden. Die Elektrolytversorgung (1M KOH, 60 °C) erfolgte über je einen Strömungs-/ und Stromverteiler (C), die beide über Dichtungen (D) elektrisch isoliert wurden.

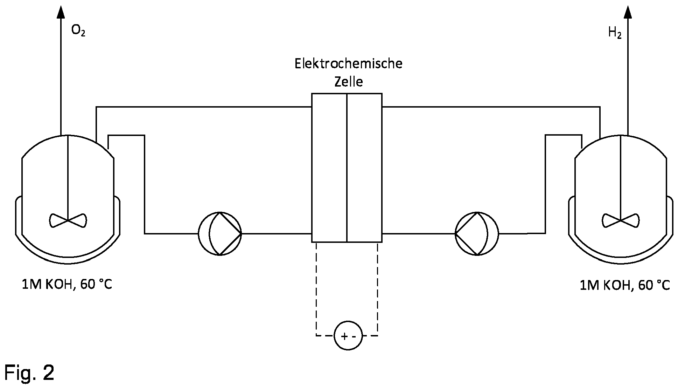

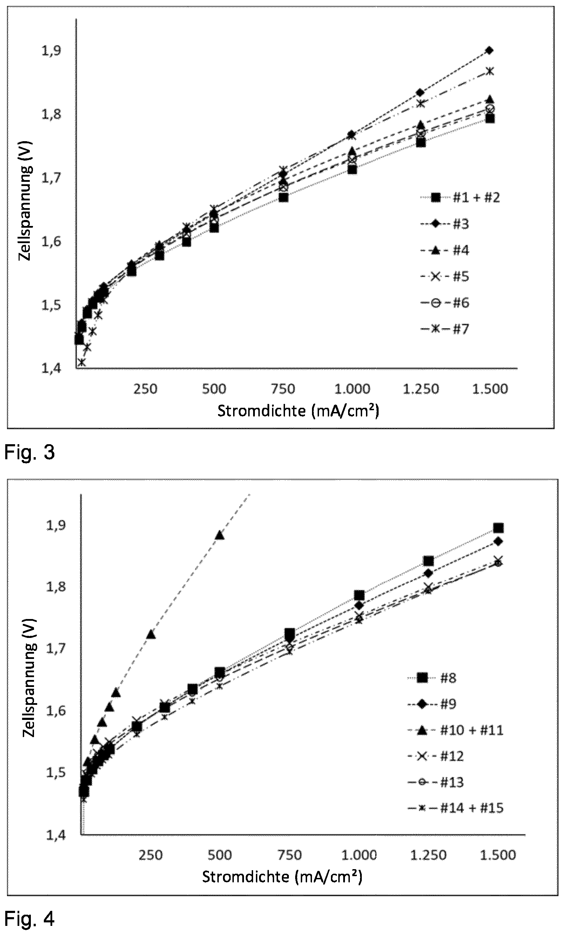

Die Funktion der hergestellten Schichtkörper konnte in der genannten Zelle in einem Teststand (Figur 2) anhand typischer Strom-Spannungs-Kurven (galvanostatisch: 0,02 - 1,50 A/cm²) gezeigt werden, was die Diagramme in Figur 3 und Figur 4 zeigen.

Grundsätzlich können die auf Grundlage der beschriebenen Katalysator-Ionomer-Formulierungen (Dispersionen) hergestellten Katalysatorschichten auch in anderen elektrochemischen Prozessen als in der alkalischen Membran-Wasserelektrolyse (AEM-WE) angewendet werden - Beispiele hierzu sind eine alkalische Brennstoffzelle oder der Elektrolyse (Reduktion) von Kohlendioxid.

**Tabelle 1 Zusammensetzung von Dispersionen**

| **Beispiel** | **Ionomer-Lösung** | **Massenverhältnis** | | **Dispersionsmittel** | | **katalytisch aktive Substanz** | **Feststoff** | **Dispergieren** | **Substrat** | **Elektrochemisch aktive Substanz auf Substrat** |
|---|---|---|---|---|---|---|---|---|---|---|
| **#** | **Konzentration Ionomer in DMSO [mg/ml]** | **Partikel** | **lonomer** | **Anteil Wasser** | **Anteil Ethanol** | **Bezeichnung** | **Konzentration [mg/ml]** | **Technologie** | **Bezeichnung** | **Beladung [mg/cm²]** |
| 1 | 50 | 3 | 1 | 1 | 1 | Pt/C | 11 | Ultraschall | Vlies: Kohlenstoff | 0,6 |
| 2 | 50 | 4 | 1 | 1 | 1 | Ir | 11 | Ultraschall | Vlies: Edelstahl | 1,0 |
| 3 | 50 | 4 | 1 | 1 | 1 | IrOx | 11 | Ultraschall | Vlies: Kohlenstoff | 1,1 |
| 4 | 50 | 3 | 1 | 1 | 1 | Ir | 11 | Ultraschall | Vlies: Edelstahl | 0,9 |
| 5 | 50 | 6 | 1 | 1 | 1 | Ir | 11 | Ultraschall | Vlies: Edelstahl | 1,0 |
| 6 | 50 | 9 | 1 | 1 | 1 | Ir | 11 | Ultraschall | Vlies: Edelstahl | 1,0 |
| 7 | 50 | 4 | 1 | 1 | 1 | PbRuOx | 11 | Ultraschall | Vlies: Edelstahl | 1,0 |
| 8 | 50 | 4 | 1 | 1 | 1 | NiOx | 11 | Ultraschall | Vlies: Edelstahl | 0,9 |
| 9 | 50 | 4 | 1 | 1 | 1 | CoOx | 11 | Ultraschall | Vlies: Edelstahl | 0,9 |
| 10 | 27,5 | 13 | 1 | 1 | 1 | Pt/C | 27 | Ultraschall | Vlies: Kohlenstoff | 0,2 |
| 11 | 27,5 | 13 | 1 | 1 | 1 | IrOx | 27 | Ultraschall | Vlies: Kohlenstoff | 1,6 |
| 12 | 50 | 3 | 1 | 1 | 1 | Pt/C | 11 | Ultraschall | Membran | 0,6 |
| 13 | 50 | 4 | 1 | 1 | 1 | Ir | 11 | Ultraschall | Membran | 1,0 |
| 14 | 50 | 3 | 1 | 1 | 1 | Pt/C | 11 | ULTRA-TURRAX^{®} | Vlies: Kohlenstoff | 0,7 |
| 15 | 50 | 4 | 1 | 1 | 1 | Ir | 11 | ULTRA-TURRAX^{®} | Vlies: Edelstahl | 1,0 |

### Sedimentationsversuche

Mit Sedimentationsversuchen soll die Stabilität der Dispersionen untersucht werden. Dafür stehen vier verschiedene Zusammensetzungen zur Verfügung, die je mit und ohne lonomer betrachtet werden. Als Katalysator wird entweder Platin/Kohlenstoff oder Nickeloxid verwendet.

### Durchführung:

Die Dispersionen werden in einem Schnappdeckelglas angesetzt:
Dispersion 1: 11mg/ml Pt/C in DMSO
Dispersion 2: 11 mg/ml Pt/C in Ethanol:Wasser
Dispersion 3: 11 mg/ml NiO in DMSO
Dispersion 4: 11 mg/ml NiO in Ethanol:Wasser

Die Dispersionen 1 bis 4 werden 30 Minuten in das Ultraschallbad gestellt und anschließend geschüttelt. Die Sedimentation wird beobachtet und dokumentiert.

Nach etwa 30 Minuten wird lonomer hinzugegeben:
Dispersion 1 und 2: + 3,7 mg/ml lonomer
Dispersion 3 und 4: + 2,8 mg/ml Ionomer

Die Dispersionen werden eine Minute in das Ultraschallbad gestellt, geschüttelt und die Sedimentation beobachtet.

### Beobachtung:

Dispersion mit Pt/C in DMSO + Ionomer sedimentiert nach 15 Minuten und bildet zwei Phasen, wobei die obere Phase durchsichtig und die untere Phase schwarz ist. Auch die Dispersionen mit Nickeloxid in Ethanol und Wasser mit und ohne Ionomer bilden eine zwei-Phasen-Trennung. Ohne lonomer entwickelt sich diese nach ca 3 Minuten. Hier setzt sich unten eine schwarze Schicht ab und oben eine dunkelgraue. Bei der Dispersion mit lonomer erkennt man ebenfalls nach 3 Minuten eine leichte Trennung in hell und dunkel, diese wird jedoch sichtbarer nach 15 Minuten. Die obere Phase ist milchig und die untere schwarz.

Die Dispersionen Pt/C in Ethanol und Wasser mit und ohne Ionomer, sowie Nickeloxid in DMSO mit und ohne lonomer und Pt/C in DMSO weisen keine Auffälligkeiten in der Versuchszeit auf.

## Patentansprüche

1. Dispersion, welche zumindest die folgenden Komponenten enthält:
• eine Lösung eines anionenleitfähigen Polymers;
• Partikeln enthaltend mindestens eine elektrokatalytisch aktive Substanz;
• optional mindestens ein Dispersionsmittel;
wobei das anionenleitfähige Polymer mindestens eine Struktur enthält, welche ausgewählt ist aus der Gruppe bestehend aus den Strukturformeln (I), (II) und (III): 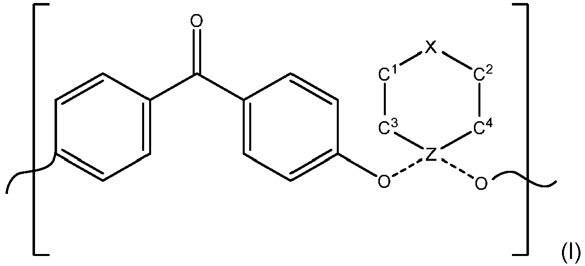
wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 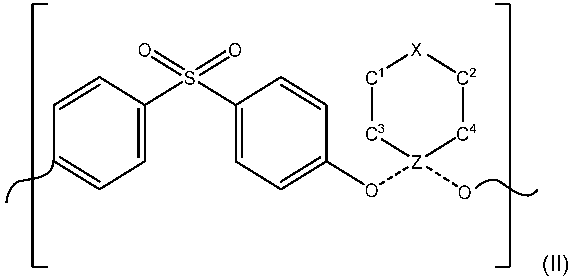
wobei in (II) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 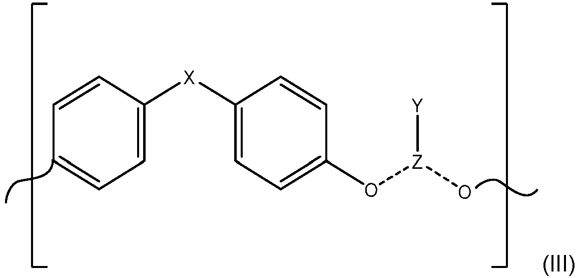
wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist;
**dadurch gekennzeichnet,**
**dass** das Massenverhältnis von anionenleitendem Polymer zu Partikel in der Dispersion zwischen 1:1 und 1:20 beträgt oder zwischen 1:1 und 1:5 oder zwischen 1:6 und 1:10.

2. Dispersion nach Anspruch 1, **dadurch gekennzeichnet, dass** die Lösung des anionenleitfähigen Polymers zumindest ein Lösemittel enthält, welches ausgewählt ist aus der Gruppe bestehend aus N-Methyl-2-pyrrolidon (NMP), N,N-Dimethylformamid (DMF), N,N-Dimethylacetamid (DMAC) oder Dimethylsulfoxid (DMSO), und dass die Konzentration des anionenleitfähigen Polymers bezogen auf das Volumen des Lösemittels zwischen 10 mg/ml und 500 mg/ml oder zwischen 50 mg/ml und 100 mg/ml beträgt.

3. Dispersion nach Anspruch 1 oder 2, **dadurch gekennzeichnet, dass** die elektrokatalytisch aktive Substanz mindestens ein Übergangselement aufweist.

4. Dispersion nach Anspruch 1 oder 2 oder 3, **dadurch gekennzeichnet, dass** die Partikel mindestens eine elektrokatalytisch aktive Substanz enthalten, welche ausgewählt ist aus der Gruppe bestehend aus Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx), Blei-Ruthenium-Mischoxid (PbRuOx), Platin auf Kohlenstoff (Pt/C) und dass das Massenverhältnis von anionenleitendem Polymer zu Partikel in der Dispersion zwischen 1:1 und 1:20 beträgt oder zwischen 1:1 und 1:5 oder zwischen 1:6 und 1:10.

5. Dispersion nach Anspruch 4, **dadurch gekennzeichnet, dass** das anionenleitende Polymer durch mindestens eine der folgenden Strukturformeln (IVa) bis (IVd) beschrieben ist: 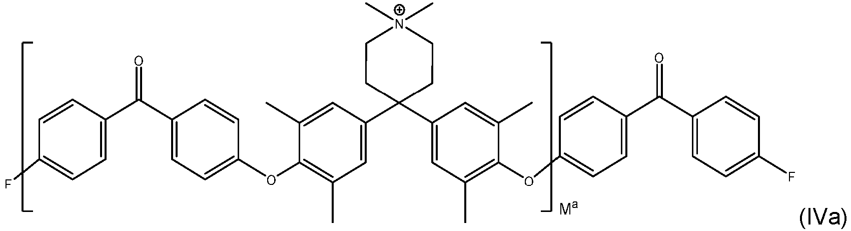 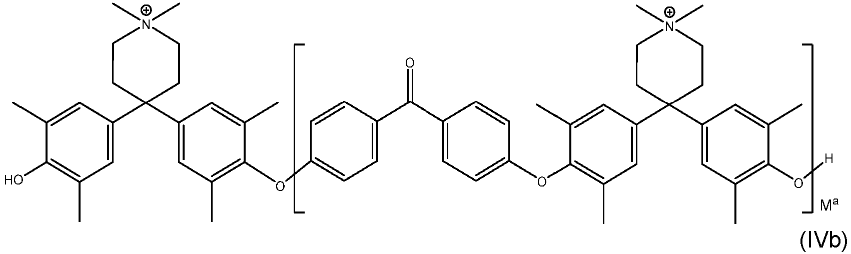 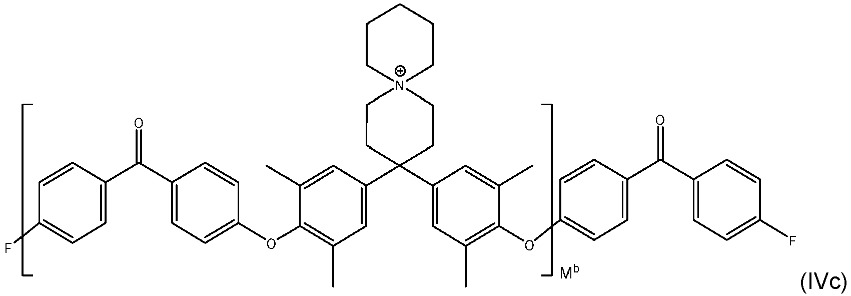 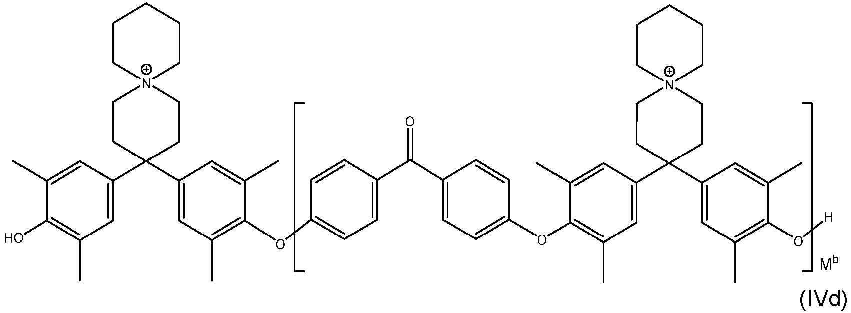 wobei M^{a} und M^{b} eine natürliche Zahl von 1 bis 500 oder von 5 bis 250 darstellen, und wobei die aromatischen Ringe weiter substituiert sein können mit einem oder mehr Halogenen und/oder mit einem oder mehreren C₁- to C₄- Alkyl-Resten, insbesondere mit Methyl-Resten.

6. Dispersion nach Anspruch 5, enthaltend zwei Dispersionsmittel, nämlich Wasser und einen Alkohol, wobei das Volumenverhältnis des Wassers zu dem Alkohol zwischen 1:3 und 3:1 beträgt.

7. Dispersion nach einem der Ansprüche 2 bis 6, **gekennzeichnet durch** eine Feststoffkonzentration von 5 mg/ml bis 100 mg/ml oder zwischen 10 mg/ml und 25 mg/ml, jeweils bezogen auf das Gesamtvolumen der flüssigen Bestandteile der Dispersion.

8. Verfahren zur Herstellung eines elektrochemisch aktiven Schichtkörpers, umfassend die folgenden Schritte:
a) Bereitstellen einer Dispersion nach einem der Ansprüche 1 bis 7, welche zumindest die folgenden Komponenten enthält:
• ein Dispersionsmittel;
• eine von dem Dispersionsmittel verschiedenes, organisches Lösemittel;
• eine Lösung eines anionenleitfähigen Polymers in dem organischen Lösemittel;
• Partikeln enthaltend mindestens eine elektrokatalytisch aktive Substanz;
b) Bereitstellen eines Substrats;
c) Auftragen der Dispersion auf das Substrat;
d) Trocknen der auf dem Substrat aufgetragenen Dispersion;
e) Erhalt eines Schichtkörpers, umfassend das Substrat und eine darauf aufgebrachte, zumindest zweiphasige Beschichtung, wobei die Beschichtung als erste Phase das anionenleitfähige Polymer und als zweite Phase die Partikel umfasst und wobei die zweite Phase in der ersten Phase dispergiert ist.

9. Verfahren nach Anspruch 8, **dadurch gekennzeichnet, dass** das Auftragen durch Rakeln, durch Sprühen oder durch Siebdruck erfolgt.

10. Verfahren nach Anspruch 8 oder 9, **dadurch gekennzeichnet, dass** es sich bei dem Substrat um ein textiles Flächengebilde handelt, welches aus Fasern aus Nickel, Kohlenstoff oder Stahl aufgebaut ist.

11. Verfahren nach Anspruch 8 oder 9, **dadurch gekennzeichnet, dass** es sich bei dem Substrat um eine Membran aus einem anionenleitenden Polymer handelt.

12. Verfahren nach einem der Ansprüche 8 bis 11, **dadurch gekennzeichnet, dass** das Bereitstellen der Dispersion wie folgt erfolgt:
i) Bereitstellen des Dispersionsmittels;
ii) Bereitstellen des von dem Dispersionsmittel verschiedenen, organischen Lösemittels;
iii) Bereitstellen des anionenleitfähigen Polymers;
iv) Bereitstellen der Partikeln;
v) Lösen des anionenleitfähigen Polymers in dem organischen Lösemittel, sodass eine Lösung des anionenleitfähigen Polymers erhalten wird:
vi) Suspendieren der Partikel in dem Dispersionsmittel, sodass eine Suspension erhalten wird;
vii) Dosieren der Lösung zu der Suspension.

13. Elektrochemisch aktiver Schichtkörper, erhalten durch ein Verfahren nach einem der Ansprüche 8, 9 oder 10, umfassend ein Substrat und eine darauf aufgebrachte, zumindest zweiphasige Beschichtung, wobei die Beschichtung als erste Phase ein anionenleitfähiges Polymer und als zweite Phase Partikel enthaltend eine elektrokatalytisch aktive Substanz umfasst, und wobei die zweite Phase in der ersten Phase dispergiert ist,
**dadurch gekennzeichnet,**
**dass** das anionenleitfähige Polymer mindestens eine Struktur enthält, welche ausgewählt ist aus der Gruppe bestehend aus den Strukturformeln (I), (II) und (III): 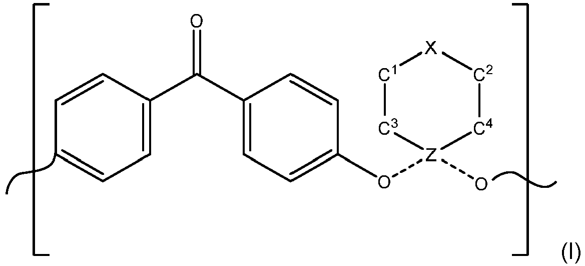
wobei in (I) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 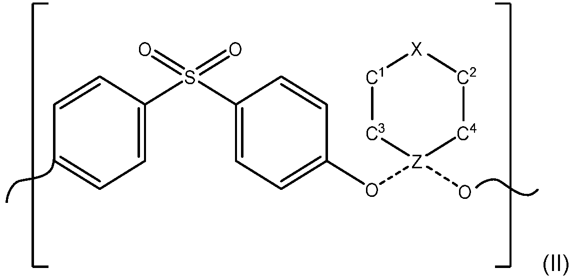
wobei in (II) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 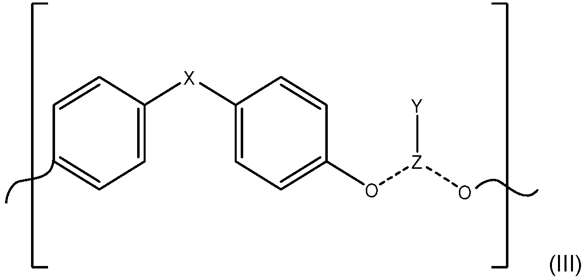
wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

14. Elektrochemisch aktiver Schichtkörper nach Anspruch 13, **dadurch gekennzeichnet, dass** das anionenleitende Polymer durch mindestens eine der folgenden Strukturformeln (IVa) bis (IVd) beschrieben ist: 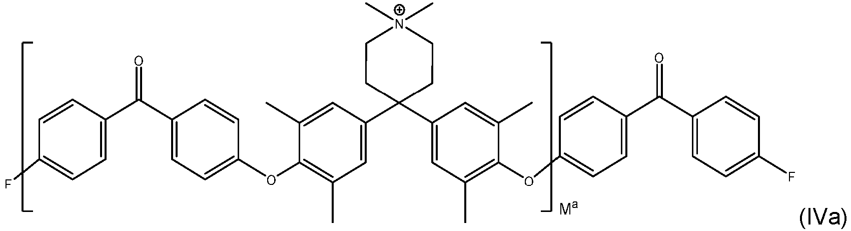 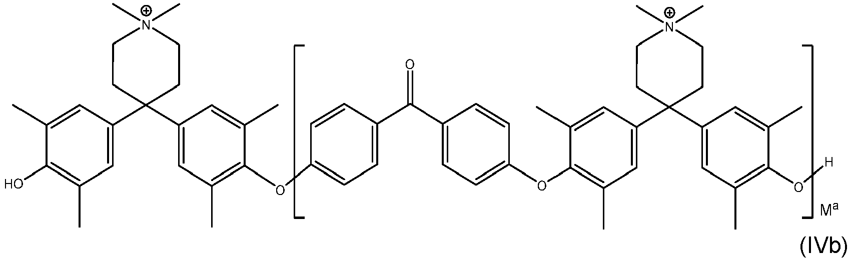 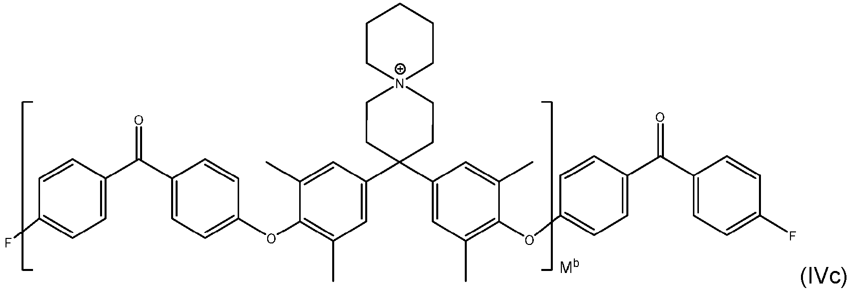 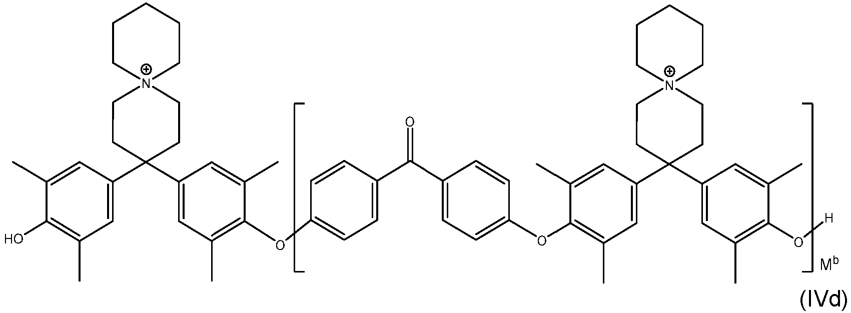 wobei M^{a} und M^{b} eine natürliche Zahl von 1 bis 500 darstellen, vorzugsweise von 5 bis 250 und wobei die aromatischen Ringe weiter substituiert sein können mit einem oder mehr Halogenen und/oder mit einem oder mehreren C₁- to C₄- Alkyl-Resten, insbesondere mit Methyl-Resten.

15. Elektrochemische Zelle umfassend mindestens einen elektrochemisch aktiven Schichtkörper nach Anspruch 13 oder 14.

16. Verfahren zur Herstellung von Wasserstoff und Sauerstoff durch elektrochemische Spaltung von Wasser, bei welchem ein wässriger Elektrolyt mit einem pH-Wert von 7 bis 15 in eine elektrochemische Zelle nach Anspruch 15 gefüllt wird.

## Claims

1. Dispersion comprising at least the following components:
• a solution of an anion-conductive polymer;
• particles comprising at least one electrocatalytically active substance;
• optionally at least one dispersant;
wherein the anion-conductive polymer comprises at least one structure selected from the group consisting of the structural formulae (I), (II) and (III): 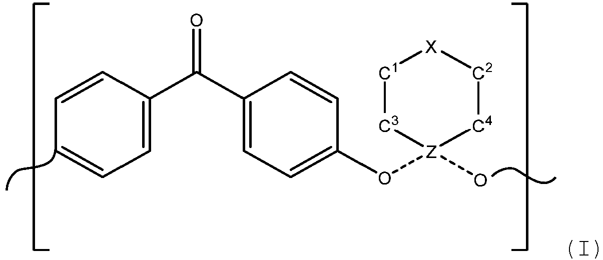
wherein, in (I), X is a structural element comprising a positively charged nitrogen atom bonded to C¹ and C² and which is bonded via two bonds to one or two hydrocarbon radicals comprising 1 to 12, preferably 1 to 6, particularly preferably 1 or 5 carbon atoms and wherein, in (I), Z is a structural element which comprises a carbon atom bonded to C³ and C⁴ and which comprises at least one aromatic six-membered ring which is bonded directly to one of the oxygen atoms, wherein the aromatic six-membered rings may be substituted by one or more halogen and/or one or more C₁- to C₄-alkyl radicals; 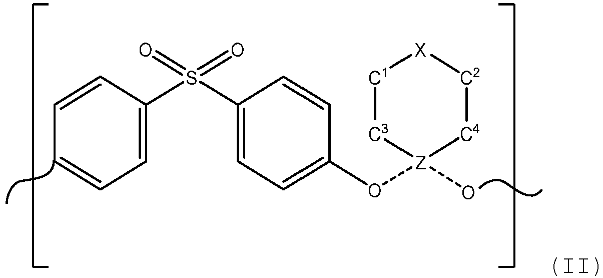
wherein, in (II), X is a structural element comprising a positively charged nitrogen atom bonded to C¹ and C² and which is bonded via two bonds to one or two hydrocarbon radicals comprising 1 to 12, preferably 1 to 6, particularly preferably 1 or 5 carbon atoms,
and wherein, in (II), Z is a structural element which comprises a carbon atom bonded to C³ and C⁴ and which comprises at least one aromatic six-membered ring which is bonded directly to one of the oxygen atoms, wherein the aromatic six-membered ring may be substituted in positions 3 and 5 by the same or different C₁- to C₄-alkyl radicals, in particular by a methyl, isopropyl or tert-butyl group, the methyl group being preferred; 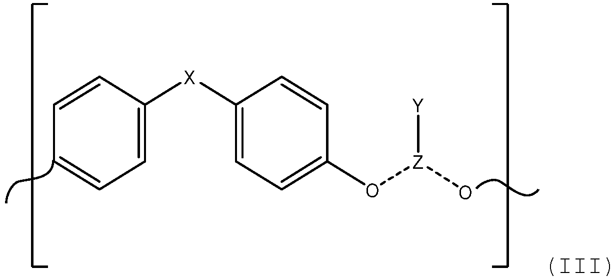
wherein, in (III), X is a ketone or sulfone group; wherein, in (III), Z is a structural element which comprises at least one tertiary carbon atom and at least one aromatic six-membered ring, where the aromatic six-membered ring is bonded directly to one of the two oxygen atoms;
and wherein, in (III), Y is a structural element which comprises at least one nitrogen atom having positive charge, where this nitrogen atom is bonded to the structural element Z;
**characterized**
**in that** the ratio by mass of anion-conducting polymer to particles in the dispersion is between 1:1 and 1:20 or between 1:1 and 1:5 or between 1:6 and 1:10.

2. Dispersion according to Claim 1, **characterized in that** the solution of the anion-conductive polymer comprises at least one solvent selected from the group consisting of N-methyl-2-pyrrolidone (NMP), N,N-dimethylformamide (DMF), N,N-dimethylacetamide (DMAC) or dimethyl sulfoxide (DMSO), and **in that** the concentration of the anion-conductive polymer, based on the volume of the solvent, is between 10 mg/ml and 500 mg/ml or between 50 mg/ml and 100 mg/ml.

3. Dispersion according to Claim 1 or 2, **characterized in that** the electrocatalytically active substance comprises at least one transition element.

4. Dispersion according to Claim 1 or 2 or 3, **characterized in that** the particles comprise at least one electrocatalytically active substance selected from the group consisting of iridium (Ir), iridium oxide (IrOx), nickel oxide (NiOx), cobalt oxide (CoOx), nickel-iron mixed oxide (NiFeOx), nickel-cobalt mixed oxide (NiCoOx), lead-ruthenium mixed oxide (PbRuOx), platinum on carbon (Pt/C) and that the ratio by mass of anion-conducting polymer to particles in the dispersion is between 1:1 and 1:20 or between 1:1 and 1:5 or between 1:6 and 1:10.

5. Dispersion according to Claim 4, **characterized in that** the anion-conducting polymer is described by at least one of the following structural formulae (IVa) to (IVd): 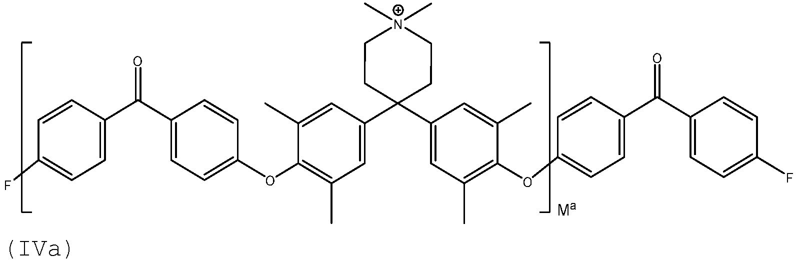 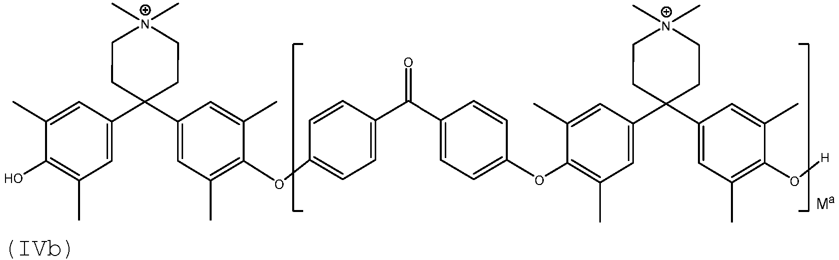 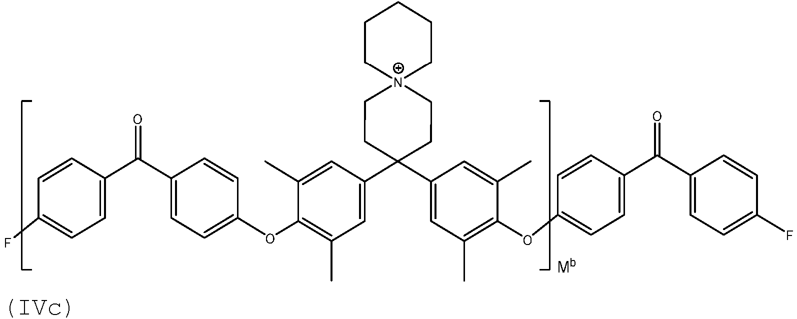 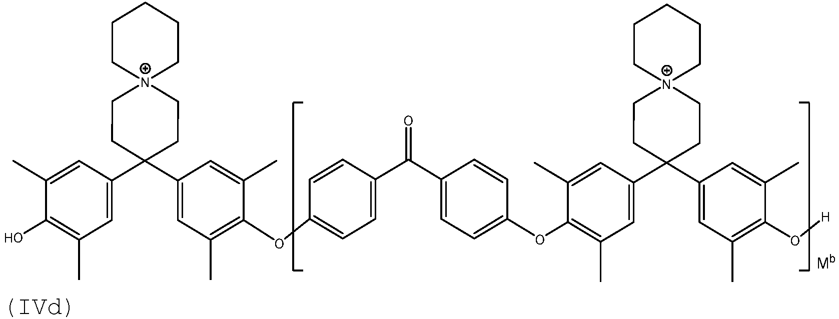 wherein M^{a} and M^{b} are a natural number from 1 to 500 or from 5 to 250, and wherein the aromatic rings may be further substituted by one or more halogens and/or by one or more C₁- to C₄-alkyl radicals, especially by methyl radicals.

6. Dispersion according to Claim 5, comprising two dispersants, namely water and an alcohol, wherein the ratio by volume of the water to the alcohol is between 1:3 and 3:1.

7. Dispersion according to any of Claims 2 to 6, **characterized by** a solids concentration of 5 mg/ml to 100 mg/ml or between 10 mg/ml and 25 mg/ml, based in each case on the total volume of the liquid constituents of the dispersion.

8. Process for producing an electrochemically active layer structure, comprising the following steps:
a) providing a dispersion according to any of Claims 1 to 7 comprising at least the following components:
• a dispersant;
• an organic solvent different from the dispersant;
• a solution of an anion-conductive polymer in the organic solvent;
• particles comprising at least one electrocatalytically active substance;
b) providing a substrate;
c) applying the dispersion to the substrate;
d) drying the dispersion applied to the substrate;
e) obtaining a layer structure comprising the substrate and an at least two-phase coating applied thereto, wherein the coating comprises the anion-conductive polymer as first phase and the particles as second phase and wherein the second phase is dispersed in the first phase.

9. Process according to Claim 8, **characterized in that** the application is carried out by bar coating, by spraying or by screenprinting.

10. Process according to Claim 8 or 9, **characterized in that** the substrate is a textile fabric composed of fibres of nickel, carbon or steel.

11. Process according to Claim 8 or 9, **characterized in that** the substrate is a membrane composed of an anion-conducting polymer.

12. Process according to any of Claims 8 to 11, **characterized in that** the dispersion is provided as follows:
i) providing the dispersant;
ii) providing the organic solvent different from the dispersant;
iii) providing the anion-conductive polymer;
iv) providing the particles;
v) dissolving the anion-conductive polymer in the organic solvent so that a solution of the anion-conductive polymer is obtained;
vi) suspending the particles in the dispersant so that a suspension is obtained;
vii) adding the solution to the suspension.

13. Electrochemically active layer structure, obtained by a process according to any of Claims 8, 9 or 10, comprising a substrate and an at least two-phase coating applied thereto, wherein the coating comprises an anion-conductive polymer as first phase and particles comprising an electrocatalytically active substance as second phase, and wherein the second phase is dispersed in the first phase,
**characterized**
**in that** the anion-conductive polymer comprises at least one structure selected from the group consisting of the structural formulae (I), (II) and (III): 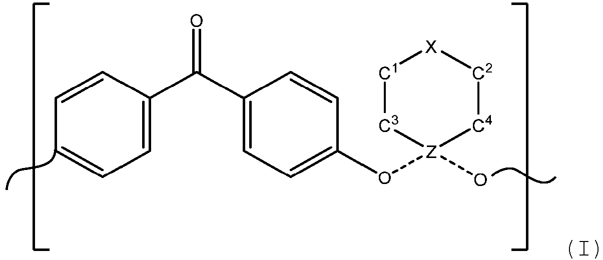
wherein, in (I), X is a structural element comprising a positively charged nitrogen atom bonded to C¹ and C² and which is bonded via two bonds to one or two hydrocarbon radicals comprising 1 to 12, preferably 1 to 6, particularly preferably 1 or 5 carbon atoms
and wherein, in (I), Z is a structural element which comprises a carbon atom bonded to C³ and C⁴ and which comprises at least one aromatic six-membered ring which is bonded directly to one of the oxygen atoms, wherein the aromatic six-membered rings may be substituted by one or more halogen and/or one or more C₁- to C₄-alkyl radicals; 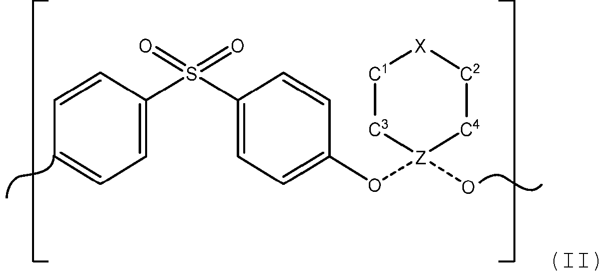
wherein, in (II), X is a structural element comprising a positively charged nitrogen atom bonded to C¹ and C² and which is bonded via two bonds to one or two hydrocarbon radicals comprising 1 to 12, preferably 1 to 6, particularly preferably 1 or 5 carbon atoms,
and wherein, in (II), Z is a structural element which comprises a carbon atom bonded to C3 and C4 and which comprises at least one aromatic six-membered ring which is bonded directly to one of the oxygen atoms, wherein the aromatic six-membered ring may be substituted in positions 3 and 5 by the same or different C₁- to C₄-alkyl radicals, in particular by a methyl, isopropyl or tert-butyl group, the methyl group being preferred; 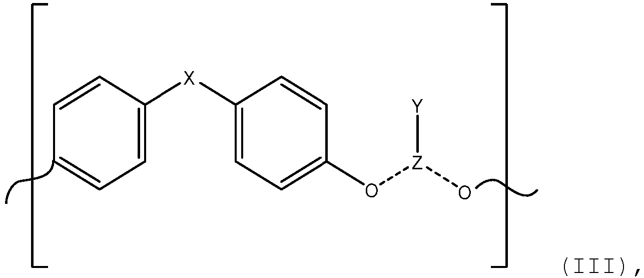
wherein, in (III), X is a ketone or sulfone group;
wherein, in (III), Z is a structural element which comprises at least one tertiary carbon atom and at least one aromatic six-membered ring, where the aromatic six-membered ring is bonded directly to one of the two oxygen atoms;
and wherein, in (III), Y is a structural element which comprises at least one nitrogen atom having positive charge, where this nitrogen atom is bonded to the structural element Z.

14. Electrochemically active layer structure according to Claim 13, **characterized in that** the anion-conducting polymer is described by at least one of the following structural formulae (IVa) to (IVd): 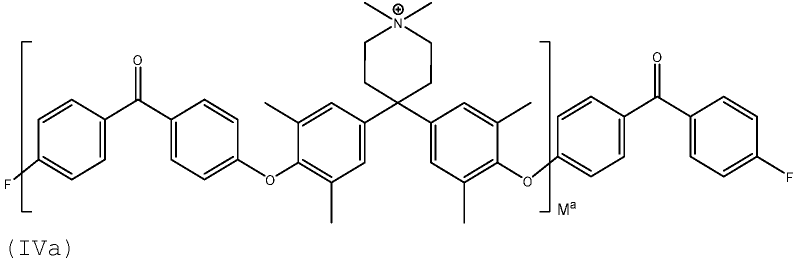 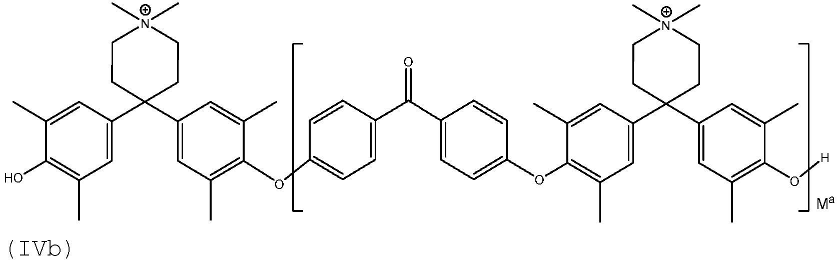 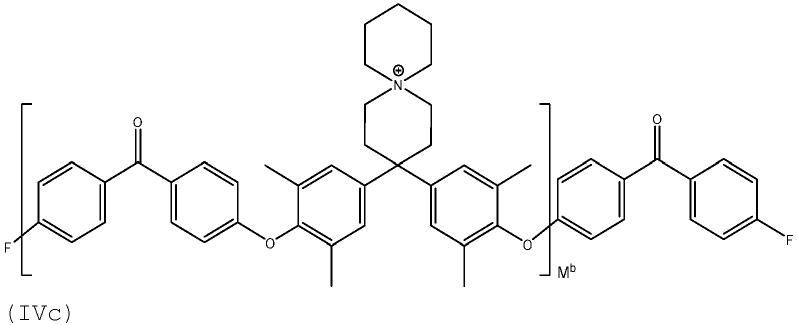 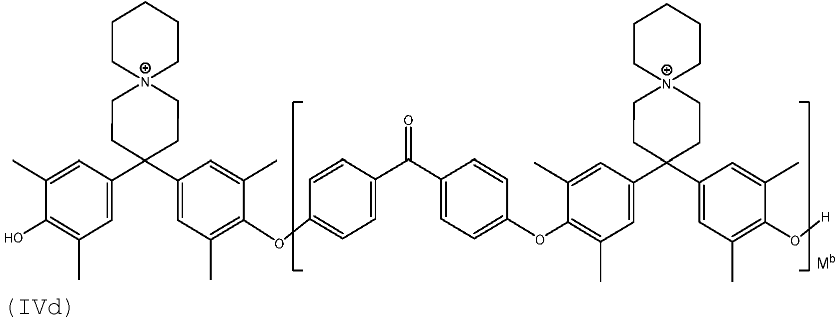 wherein M^{a} and M^{b} are a natural number from 1 to 500, preferably from 5 to 250, and wherein the aromatic rings may be further substituted by one or more halogens and/or by one or more C₁- to C₄-alkyl radicals, especially by methyl radicals.

15. Electrochemical cell comprising at least one electrochemically active layer structure according to Claim 13 or 14.

16. Process for producing hydrogen and oxygen by electrochemical cleavage of water, in which an aqueous electrolyte having a pH of 7 to 15 is filled into an electrochemical cell according to Claim 15.

## Revendications

1. Dispersion, qui contient au moins les composants suivants :
• une solution d'un polymère conducteur d'anions ;
• des particules contenant au moins une substance électrocatalytiquement active ;
• en option au moins un agent dispersant ;
le polymère conducteur d'anions contenant au moins une structure qui est choisie dans le groupe constitué par les formules structurelles (I), (II) et (III) : 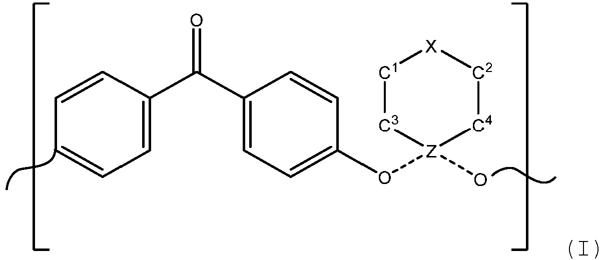
où dans (I) X représente un élément structural, comprenant un atome d'azote chargé positivement, qui est lié à C¹ et C² et qui est lié par deux liaisons à un ou deux radicaux hydrocarbonés comprenant de 1 à 12, de préférence de 1 à 6, de façon particulièrement préférée 1 ou 5 atomes de carbone
et où dans (I) Z représente un élément structural qui comprend un atome de carbone qui est lié à C³ et C⁴, et qui comprend au moins un cycle hexagonal aromatique qui est lié directement à l'un des atomes d'oxygène, les cycles hexagonaux aromatiques pouvant être substitués par un ou plusieurs radicaux halogéno et/ou un ou plusieurs radicaux alkyle en C₁ à C₄ ; 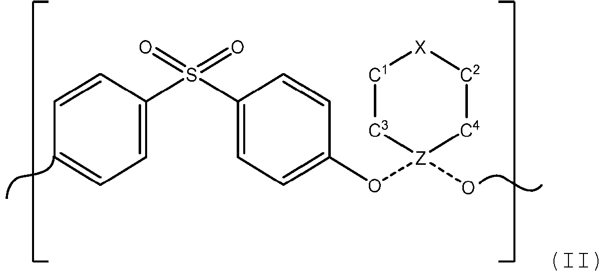
où dans (II) X représente un élément structural, comprenant un atome d'azote chargé positivement, qui est lié à C¹ et C² et qui est lié par deux liaisons à un ou deux radicaux hydrocarbonés comprenant de 1 à 12, de préférence de 1 à 6, de façon particulièrement préférée 1 ou 5 atomes de carbone,
et où dans (II) Z représente un élément structural qui comprend un atome de carbone qui est lié à C³ et C⁴, et qui comprend au moins un cycle hexagonal aromatique qui est lié directement à l'un des atomes d'oxygène, les cycles hexagonaux aromatiques pouvant être substitués dans les positions 3 et 5 par des radicaux alkyle en C₁ à C₄ identiques ou différents, en particulier par un groupe méthyle, isopropyle ou tert-butyle, le groupe méthyle étant préféré ; 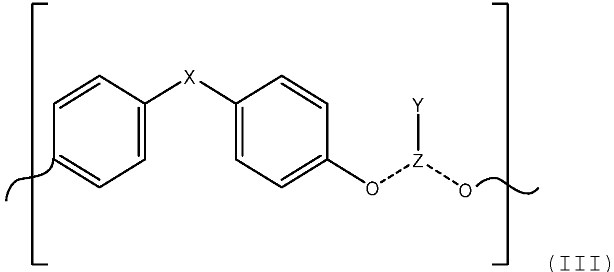
où dans (III) X représente un groupe cétone ou sulfone ; où dans (III) Z représente un élément structural qui comprend au moins un atome de carbone tertiaire et au moins un cycle hexagonal aromatique, le cycle hexagonal aromatique étant lié directement à l'un des deux atomes d'oxygène ;
et où dans (III) Y représente un élément structural qui comprend au moins un atome d'azote à charge positive, cet atome d'azote étant lié à l'élément structural Z ; **caractérisé en ce que**
le rapport en masse de polymère conducteur d'anions à particules dans la dispersion vaut entre 1:1 et 1:20 ou entre 1:1 et 1:5 ou entre 1:6 et 1:10.

2. Dispersion selon la revendication 1, **caractérisée en ce que** la solution du polymère conducteur d'anions contient au moins un solvant qui est choisi dans le groupe constitué par la N-méthyl-2-pyrrolidone (NMP), le N,N-diméthylformamide (DMF), le N,N-diméthylacétamide (DMAC) ou le diméthylsulfoxyde (DMSO), et **en ce que** la concentration du polymère conducteur d'anions au volume du solvant vaut entre 10 mg/ml et 500 mg/ml ou entre 50 mg/ml et 100 mg/ml.

3. Dispersion selon la revendication 1 ou 2, **caractérisée en ce que** la substance électrocatalytiquement active comporte au moins un élément de transition.

4. Dispersion selon la revendication 1 ou 2 ou 3, **caractérisée en ce que** les particules contiennent au moins une substance électrocatalytiquement active qui est choisie dans le groupe constitué par l'iridium (Ir), l'oxyde d'iridium (IrOx), l'oxyde de nickel (NiOx), l'oxyde de cobalt (CoOx), l'oxyde mixte de nickel et de fer (NiFeOx), l'oxyde mixte de nickel et de cobalt (NiCoOx), l'oxyde mixte de plomb et de ruthénium (PbRuOx), le platine sur carbone (Pt/C) et **en ce que** le rapport en masse de polymère conducteur d'anions à particules dans la dispersion vaut entre 1:1 et 1:20 ou entre 1:1 et 1:5 ou entre 1:6 et 1:10.

5. Dispersion selon la revendication 4, **caractérisée en ce que** le polymère conducteur d'anions est décrit par au moins l'une des formules structurelles (IVa) à (IVd) suivantes : 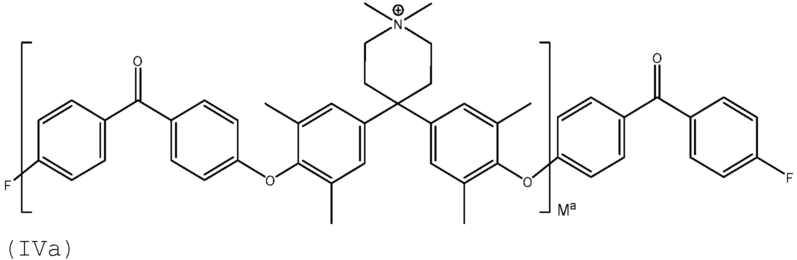 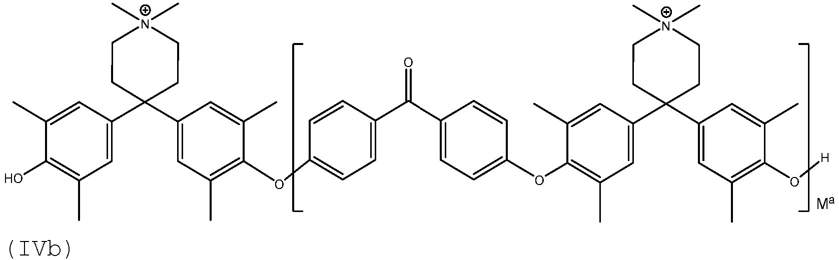 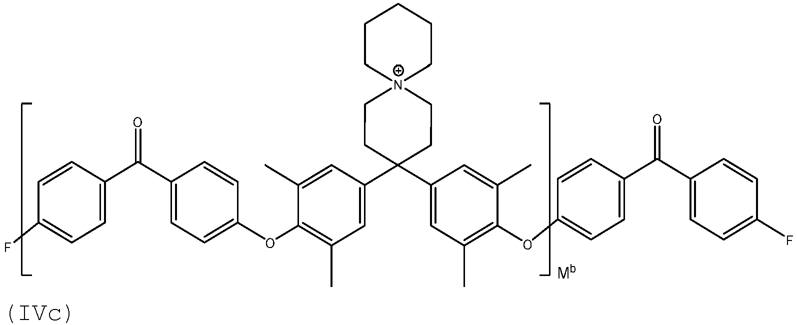 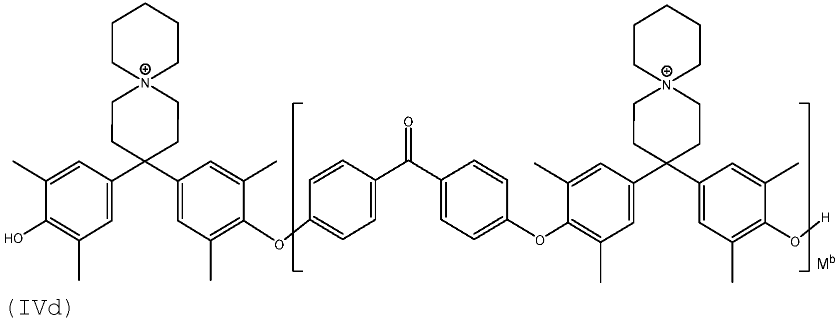 où M^{a} et M^{b} représentent un nombre naturel valant de 1 à 500 ou de 5 à 250, et où les cycles aromatiques peuvent être substitués davantage par un ou plusieurs atomes d'halogène et/ou par un ou plusieurs radicaux alkyle en C₁ à C₄, en particulier par des radicaux méthyle.

6. dispersion selon la revendication 5, contenant deux agents dispersants, à savoir l'eau et un alcool, le rapport en volume de l'eau à l'alcool valant entre 1:3 et 3:1.

7. Dispersion selon l'une quelconque des revendications 2 à 6, **caractérisée par** une concentration de matières solides de 5 mg/ml à 100 mg/ml ou entre 10 mg/ml et 25 mg/ml, chaque fois par rapport au volume total des constituants liquides de la dispersion.

8. Procédé pour la préparation d'un corps stratifié électrochimiquement actif, comprenant les étapes suivantes :
a) mise à disposition d'une dispersion selon l'une quelconque des revendications 1 à 7, qui contient au moins les composants suivants :
• un agent dispersant ;
• un solvant organique différent de l'agent dispersant ;
• une solution d'un polymère conducteur d'anions dans le solvant organique ;
• des particules contenant au moins une substance électrocatalytiquement active ;
b) mise à disposition d'un substrat ;
c) application de la dispersion sur le substrat ;
d) séchage de la dispersion appliquée sur le substrat ;
e) obtention d'un corps stratifié comprenant le substrat et un revêtement au moins biphasique appliqué sur ce dernier, le revêtement comprenant en tant que première phase le polymère conducteur d'anions et en tant que seconde phase les particules et la seconde phase étant dispersée dans la première phase.

9. Procédé selon la revendication 8, **caractérisé en ce que** l'application s'effectue par enduction à la racle, par pulvérisation ou par sérigraphie.

10. Procédé selon la revendication 8 ou 9, **caractérisé en ce que** pour ce qui est du substrat il s'agit d'une structure plane textile qui est constituée de fibres de nickel, de carbone ou d'acier.

11. Procédé selon la revendication 8 ou 9, **caractérisé en ce que** pour ce qui est du substrat il s'agit d'une membrane à base d'un polymère conducteur d'anions.

12. Procédé selon l'une quelconque des revendications 8 à 11, **caractérisé en ce que** la mise à disposition de la dispersion s'effectue comme suit :
i) mise à disposition de l'agent dispersant ;
ii) mise à disposition du solvant organique différent de l'agent dispersant ;
iii) mise à disposition du polymère conducteur d'anions ;
iv) mise à disposition des particules ;
v) dissolution du polymère conducteur d'anions dans le solvant organique, de sorte qu'une solution du polymère conducteur d'anions est obtenue ;
vi) mise en suspension des particules dans l'agent dispersant, de sorte qu'une suspension est obtenue ;
vii) addition dosée de la solution à la suspension.

13. Corps stratifié électrochimiquement actif, obtenu par un procédé selon l'une quelconque des revendications 8, 9 ou 10, comprenant un substrat et un revêtement au moins biphasique appliqué sur ce dernier, le revêtement comprenant en tant que première phase un polymère conducteur d'anions et en tant que seconde phase des particules contenant une substance électrocatalytiquement active, et la seconde phase étant dispersée dans la première phase,
**caractérisé en ce que**
le polymère conducteur d'anions contient au moins une structure qui est choisie dans le groupe constitué par les formules structurelles (I), (II) et (III) : 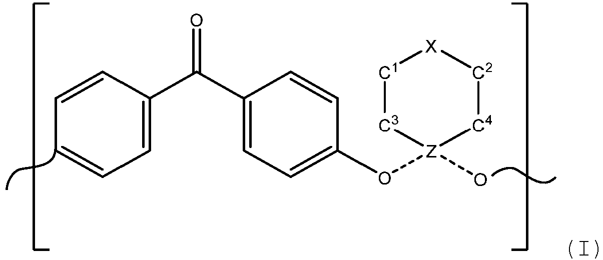
où dans (I) X représente un élément structural, comprenant un atome d'azote chargé positivement, qui est lié à C¹ et C² et qui est lié par deux liaisons à un ou deux radicaux hydrocarbonés comprenant de 1 à 12, de préférence de 1 à 6, de façon particulièrement préférée 1 ou 5 atomes de carbone
et où dans (I) Z représente un élément structural qui comprend un atome de carbone qui est lié à C³ et C⁴, et qui comprend au moins un cycle hexagonal aromatique qui est lié directement à l'un des atomes d'oxygène, les cycles hexagonaux aromatiques pouvant être substitués par un ou plusieurs radicaux halogéno et/ou un ou plusieurs radicaux alkyle en C₁ à C₄ ; 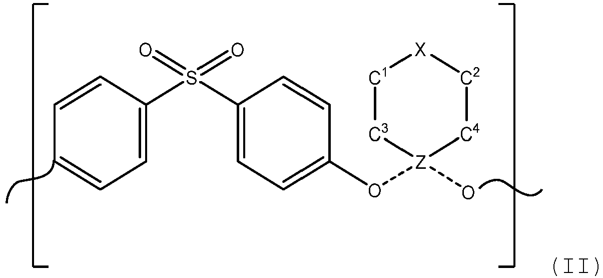
où dans (II) X représente un élément structural, comprenant un atome d'azote chargé positivement, qui est lié à C¹ et C² et qui est lié par deux liaisons à un ou deux radicaux hydrocarbonés comprenant de 1 à 12, de préférence de 1 à 6, de façon particulièrement préférée 1 ou 5 atomes de carbone,
et où dans (II) Z représente un élément structural qui comprend un atome de carbone qui est lié à C³ et C⁴, et qui comprend au moins un cycle hexagonal aromatique qui est lié directement à l'un des atomes d'oxygène, les cycles hexagonaux aromatiques pouvant être substitués dans les positions 3 et 5 par des radicaux alkyle en C₁ à C₄ identiques ou différents, en particulier par un groupe méthyle, isopropyle ou tert-butyle, le groupe méthyle étant préféré ; 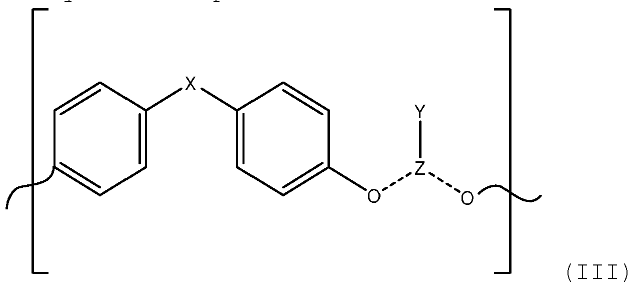
où dans (III) X représente un groupe cétone ou sulfone ; où dans (III) Z représente un élément structural qui comprend au moins un atome de carbone tertiaire et au moins un cycle hexagonal aromatique, le cycle hexagonal aromatique étant lié directement à l'un des deux atomes d'oxygène ;
et où dans (III) Y représente un élément structural qui comprend au moins un atome d'azote à charge positive, cet atome d'azote étant lié à l'élément structural Z.

14. Corps stratifié électrochimiquement actif selon la revendication 13, **caractérisée en ce que** le polymère conducteur d'anions est décrit par au moins l'une des formules structurelles (IVa) à (IVd) suivantes : 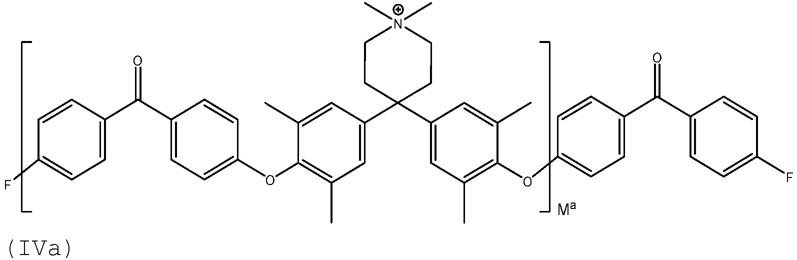 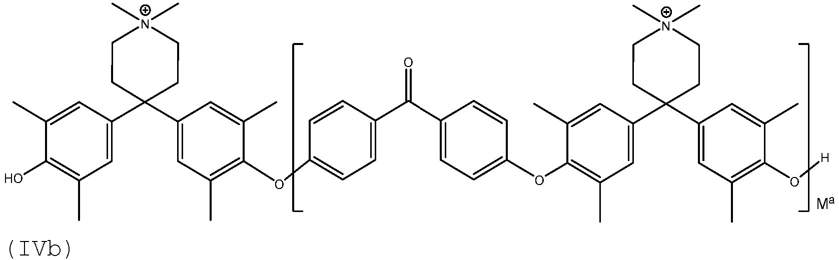 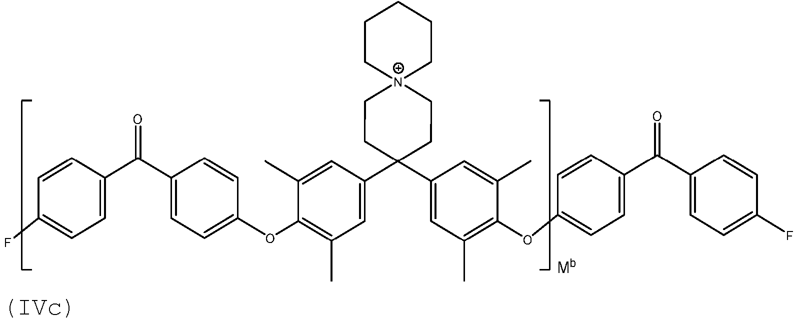 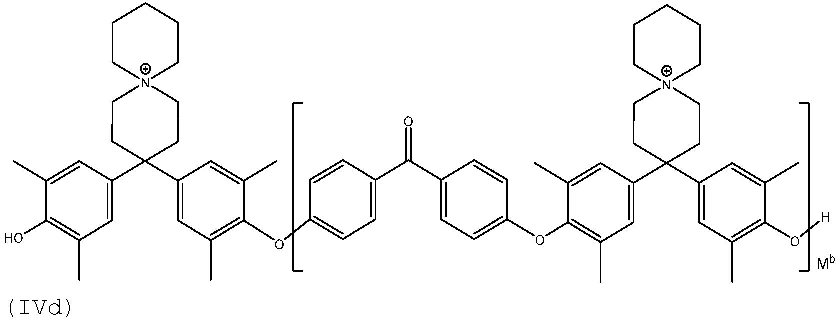 où M^{a} et M^{b} représentent un nombre naturel valant de 1 à 500, de préférence de 5 à 250, et où les cycles aromatiques peuvent être substitués davantage par un ou plusieurs atomes d'halogène et/ou par un ou plusieurs radicaux alkyle en C₁ à C₄, en particulier par des radicaux méthyle.

15. Cellule électrochimique comprenant au moins un corps stratifié électrochimiquement actif selon la revendication 13 ou 14.

16. Procédé pour la production d'hydrogène et d'oxygène par dissociation électrochimique d'eau, dans lequel un électrolyte aqueux ayant un pH de 7 à 15 est introduit dans une cellule électrochimique selon la revendication 15.
